# EUROPEAN PATENT APPLICATION

(11) **EP 4 213 035 A1**
(43) Date of publication of application: **19.07.2023**
(21) Application number: 22217425.2
(22) Date of filing: 30.12.2022
(51) Int. Cl.: G06F 16/248, G06F 16/2457

(54) **SYSTEMS AND METHODS FOR NAVIGATING A GRAPHICAL USER INTERFACE**

(30) Priority: 06.01.2022 IN 202211000755; 27.05.2022 US 202217804314
(71) Applicant: Honeywell International Inc., Charlotte, NC 28202 (US)
(72) Inventor: ARORA, Sparsh, Charlotte, 28202 (US); CHATTERJI, Agniraj, Charlotte, 28202 (US); BINOD KUMAR, Pratyaksha, Charlotte, 28202 (US)
(74) Representative: Haseltine Lake Kempner LLP

(57) **Abstract**

Disclosed are methods and systems for navigating a graphical user interface. A method may include, for example, generating a plurality of filter tags; receiving a first search input; in response to receiving the first search input, generating a hierarchy of filter tags from the plurality of filter tags based on the first search input; causing the user device to display a first set of filter tags; receiving a first selection indicative of at least one of the first set of filter tags; in response to receiving the first selection, causing the user device to display a second set of filter tags; receiving a second selection indicative of at least one of the second set of filter tags; in response to receiving the second selection, generating a first dashboard widget based on the first selection and second selection; and causing the user device to display the first dashboard widget.

## Description

### CROSS-REFERENCE TO RELATED APPLICATION(S)

This patent application claims the benefit of priority to Indian Provisional Patent Application No. 202211000755, filed on January 6, 2022, the entirety of which is incorporated herein by reference.

### TECHNICAL FIELD

Various embodiments of the present disclosure relate generally to systems and methods for navigating a graphical user interface and, more particularly, to systems and methods for developing and navigating to widgets on a dashboard of a graphical user interface.

### BACKGROUND

As more devices become digitized and connected to networks to expand the Internet of Things, enterprise performance management tools will become even more important for managing and monitoring these devices. Enterprise performance management tools may make huge amounts of information available to users tasked with managing and monitoring the devices. Navigating the available information, however, may be difficult and/or time consuming, depending on a user's familiarity with the tools and devices in the user's domain. Existing navigation features may also be insufficient to quickly and intuitively direct users to the data and metrics they wish to see.

The present disclosure is directed to overcoming one or more of these above-referenced challenges.

### SUMMARY OF THE DISCLOSURE

According to certain aspects of the disclosure, systems and methods for navigating a graphical user interface are described.

In one example, a method may include: generating, based on an object model by a system comprising at least one processor, a plurality of filter tags, wherein each of the filter tags may be associated with one or more data items and wherein the object model may include (1) telemetry data associated with a plurality of assets and (2) contextual data associated with the plurality of assets; receiving, by the system from a user device, a first search input; in response to receiving the first search input, generating, by the system, a hierarchy of filter tags from the plurality of filter tags based on the first search input, the hierarchy including at least a first set of filter tags and a second set of filter tags; causing, by the system, the user device to display the first set of filter tags; receiving, by the system from the user device, a first selection indicative of at least one of the first set of filter tags; in response to receiving the first selection, causing, by the system, the user device to display the second set of filter tags; receiving, by the system from the user device, a second selection indicative of at least one of the second set of filter tags; in response to receiving the second selection, generating, by the system, a first dashboard widget based on the first selection and second selection, the first dashboard widget being indicative of a first data item; and causing, by the system, the user device to display the first dashboard widget.

In some embodiments, the hierarchy may further include a third set of filter tags. The method may further include: in response to receiving the second selection, causing, by the system, the user device to display the third set of filter tags; receiving, by the system from the user device, a third selection indicative of at least one of the third set of filter tags; in response to receiving the third selection, generating, by the system, a second dashboard widget based on the third selection, the second dashboard widget being indicative of a second data item different from the first data item; and causing, by the system, the user device to display the second dashboard widget.

In some embodiments, the method may further include: in response to receiving the third selection, causing, by the system, the user device to stop displaying the first dashboard widget.

In some embodiments, the system may generate the hierarchy of filter tags using a machine learning model trained to learn associations between search inputs and filter tags. The method may further include: updating, by the system, the machine learning model using the first search input, the first selection, and the second selection.

In some embodiments, generation of the first dashboard widget may be further based on an access level assigned to the user device or a user of the user device.

In some embodiments, at least one of the first selection and the second selection may be input to the user device by a physical gesture of a user.

In some embodiments, the first search input may be input to the user device verbally and converted using natural language processing.

In some embodiments, the first set of filter tags and the second set of filter tags may include one or more of: an asset type, an asset attribute, a key performance indicator, a metric, an event, a dashboard identifier, a widget identifier, a process, a data integration, and a data transformation.

In some embodiments, the method may further include storing, by the system, the first selection and the selection as a template query.

In some embodiments, the method may further include: receiving, by the system from the user device, a modification request, the modification request indicative of a requested modification to the template query; in response to the modification request, causing, by the system, the user device to display a third set of filter tags; receiving, by the system from the user device, a third selection indicative of at least one of the third set of filter tags; in response to receiving the third selection, generating, by the system, a second dashboard widget based on the third selection, the second dashboard widget being indicative of a second data item different from the first data item; and causing, by the system, the user device to display the second dashboard widget.

In another example, a method may include: generating, based on an object model by a system comprising at least one processor, a plurality of filter tags, wherein each of the filter tags may be associated with one or more data items and one or more enterprise assets and wherein the object model may include (1) telemetry data associated with one or more enterprise assets and (2) contextual data associated with the one or more enterprise assets; receiving, by the system from a user device, a first set of image data, the first set of image data including at least one image of a first asset; in response to receiving the first set of image data, identifying, by the system, a first enterprise asset as matching the first asset based on the at least one image of the first asset; retrieving, by the system from the plurality of filter tags, a first set of filter tags associated with the first enterprise asset; causing, by the system, the user device to display the first set of filter tags; receiving, by the system from the user device, a first selection indicative of at least one of the first set of filter tags; in response to receiving the first selection, generating, by the system, a first dashboard widget based on the first selection, the first dashboard widget being indicative of a first data item associated with the first enterprise asset; and causing, by the system, the user device to display the first dashboard widget.

In some embodiments, the method may further include: receiving, by the system from the user device, a second set of image data, the second set of image data including at least one image of a second asset; in response to receiving the second set of image data, identifying a second enterprise asset as matching the second asset based on the at least one image of the second asset; determining, by the system, a context of the first enterprise asset and the second enterprise asset, the context including at least a relationship between the first enterprise asset and the second enterprise asset; retrieving, by the system from the plurality of filter tags, a second set of filter tags associated with the first enterprise asset and the second enterprise asset based on the context; receiving, by the system from the user device, a second selection indicative of at least one of the second set of filter tags; in response to receiving the second selection, generating, by the system, a second dashboard widget based on the second selection, the second dashboard widget being indicative of a second data item associated with at least one of the first enterprise asset and the second enterprise asset; and causing, by the system, the user device to display the second dashboard widget.

In some embodiments, the method may further include: in response to receiving the second selection, causing, by the system, the user device to stop displaying the first dashboard widget.

In some embodiments, the system may retrieve the first set of filter tags using a machine learning model trained to learn associations between image data and filter tags. The method may further include: updating, by the system, the machine learning model using the first set of image data and the first selection.

In some embodiments, generation of the first dashboard widget may be further based on an access level assigned to the user device or a user of the user device.

In some embodiments, the first selection may be input to the user device by a physical gesture of a user.

In some embodiments, the plurality of filter tags may include one or more of: an asset type, an asset attribute, a key performance indicator, a metric, an event, a dashboard identifier, a widget identifier, a process, a data integration, and a data transformation.

In a further example, a method may include: generating, based on an object model by a system comprising at least one processor, a plurality of filter tags, wherein each of the filter tags may be associated with one or more data items and wherein the object model may include (1) telemetry data associated with a plurality of assets and (2) contextual data associated with the plurality of assets; receiving, by the system from a user device, a first user input; in response to receiving the first input, retrieving, by the system using a machine learning model, a first set of filter tags from the plurality of filter tags based on the first input, wherein the machine learning model is trained to learn associations between user inputs and filter tags; causing, by the system, the user device to display the first set of filter tags; receiving, by the system from the user device, a first selection indicative of at least one of the first set of filter tags; in response to receiving the first selection, generating, by the system, a first dashboard widget based on the first selection, the first dashboard widget being indicative of a first data item; causing, by the system, the user device to display the first dashboard widget; and updating, by the system, the machine learning model based on the first user input and the first selection.

In some embodiments, the method may include: training the machine learning model to learn associations between user inputs and filter tags by (1) providing a first set of user inputs, (2) providing a first set of filter tags, and (3) manually associating each of the first set of user inputs with one or more of the first set of filter tags.

In some embodiments, the method may include: updating, by the system, the machine learning model based on one or more of: (1) a time of the first selection and (2) an access level assigned to the user device or a user of the user device.

Additional objects and advantages of the disclosed embodiments will be set forth in part in the description that follows, and in part will be apparent from the description, or may be learned by practice of the disclosed embodiments.

It is to be understood that both the foregoing general description and the following detailed description are exemplary and explanatory only and are not restrictive of the disclosed embodiments, as claimed.

### BRIEF DESCRIPTION OF THE DRAWINGS

The accompanying drawings, which are incorporated in and constitute a part of this specification, illustrate various exemplary embodiments and together with the description, serve to explain the principles of the disclosed embodiments.
FIG. 1 depicts an exemplary networked computing system environment, according to one or more embodiments.
FIG. 2 depicts a schematic block diagram of a framework of an loT platform of the networked computing system environment of FIG. 1, according to one or more embodiments.
FIG. 3 depicts a schematic diagram of a system for navigating a graphical user interface, according to one or more embodiments.
FIG. 4 depicts a schematic diagram of a graphical user interface, according to one or more embodiments.
FIG. 5A depicts an exemplary query tool, according to one or more embodiments.
FIG. 5B depicts an exemplary query tool, according to one or more embodiments.
FIG. 6 depicts an exemplary user driven search, according to one or more embodiments.
FIG. 7 depicts a flowchart of an exemplary method for displaying a dashboard widget, according to one or more embodiments.
FIG. 8 depicts a flowchart of an exemplary method for displaying a dashboard widget, according to one or more embodiments.
FIG. 9 depicts a flowchart of an exemplary method for displaying a dashboard widget, according to one or more embodiments.
FIG. 10 depicts an exemplary system that may execute techniques presented herein.

### DETAILED DESCRIPTION OF EMBODIMENTS

Reference will now be made in detail to embodiments, examples of which are illustrated in the accompanying drawings. In the following detailed description, numerous specific details are set forth in order to provide a thorough understanding of the various described embodiments. However, it will be apparent to one of ordinary skill in the art that the various described embodiments may be practiced without these specific details. In other instances, well-known methods, procedures, components, circuits, and networks have not been described in detail so as not to unnecessarily obscure aspects of the embodiments.

Various embodiments of the present disclosure relate generally to systems and methods for developing and navigating to widgets on a dashboard of a graphical user interface. Additionally, embodiments of the present disclosure may provide simplified tools for creating widgets and custom dashboards while also powering search functionality.

Enterprise performance management (EPM) tools may make large amounts of information available to a user. EPM applications may be useful for warehouses, industrial plants, buildings, and other settings in which it is necessary to manage and monitor multiple connected devices. Dashboards of the EPM applications may be primary tools with which maintenance engineers, operators, and managers navigate available information to make day-to-day decisions, changes, and improvements to their processes to meet a wide range of targets. Dashboards, however, may fail to provide users with the ability to easily access specific information at a desired level of granularity.

Navigation and search features for EPM tools, for example, often require the user to make a series of selections and navigate between different pages of a dashboard. This type of navigation may be time consuming and may further make finding desired information difficult unless the user knows precisely which selections to make.

As an illustrative example, information pertaining to a particular device may be useful to a maintenance engineer tasked with maintaining the device. In the absence of a robust search engine for the EPM tool, the maintenance engineer may have to navigate to a device list and locate the desired device. The maintenance engineer may then have to navigate through dashboard pages to locate a specific metric. By requiring the maintenance engineer to navigate through dashboard pages sequentially to find the desired information, the engineer may unnecessarily devote time to locating the desired information that could instead be devoted to problem solving.

Accordingly, a need exists to address the foregoing challenges. In particular, a need exists for systems with improved capabilities for navigating to widgets on a dashboard of a graphical user interface. Embodiments of this disclosure offer technical solutions to address the foregoing needs, as well as other needs.

While this disclosure describes the systems and methods with reference to an Internet-of-Things platform, it should be appreciated that the present systems and methods may be applicable to other platforms, such as financial software platforms, social media platforms, internet search platforms, and other data intensive platforms. Further, while certain details of an Internet-of-Things platform are described herein, additional descriptions of such a platform may be found in U.S. Application Nos. 15/971,140, 16/128,236, 15/956,862, 16/245,149, 16/660,122, and 16/812,027 (published as US 2019/0123959, US 2020/0084113. US 2019/0324838. US 2020/0225623, US 2021/0117436, and US 2020/0285203), which are incorporated by reference herein in their entirety.

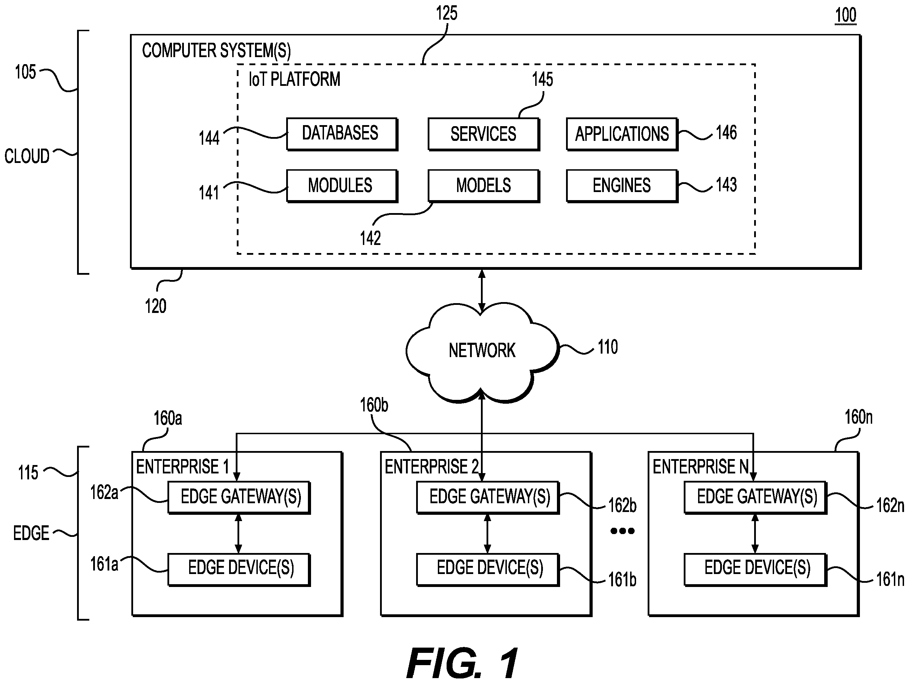

FIG. 1 illustrates an exemplary networked computing system environment 100, according to the present disclosure. As shown in FIG. 1, networked computing system environment 100 is organized into a plurality of layers including a cloud 105, a network 110, and an edge 115. As detailed further below, components of the edge 115 are in communication with components of the cloud 105 via network 110.

Network 110 may be any suitable network or combination of networks and may support any appropriate protocol suitable for communication of data to and from components of the cloud 105 and between various other components in the networked computing system environment 100 (e.g., components of the edge 115). Network 110 may include a public network (e.g., the Internet), a private network (e.g., a network within an organization), or a combination of public and/or private networks. Network 110 may be configured to provide communication between various components depicted in FIG. 1. Network 110 may comprise one or more networks that connect devices and/or components in the network layout to allow communication between the devices and/or components. For example, the network 110 may be implemented as the Internet, a wireless network, a wired network (e.g., Ethernet), a local area network (LAN), a Wide Area Network (WANs), Bluetooth, Near Field Communication (NFC), or any other type of network that provides communications between one or more components of the network layout. In some embodiments, network 110 may be implemented using cellular networks, satellite, licensed radio, or a combination of cellular, satellite, licensed radio, and/or unlicensed radio networks.

Components of the cloud 105 include one or more computer systems 120 that form a so-called "Internet-of-Things" or "loT" platform 125. It should be appreciated that "IoT platform" is an optional term describing a platform connecting any type of Internet-connected device, and should not be construed as limiting on the types of computing systems useable within loT platform 125. In particular, computer systems 120 may include any type or quantity of one or more processors and one or more data storage devices comprising memory for storing and executing applications or software modules of networked computing system environment 100. In one embodiment, the processors and data storage devices are embodied in server-class hardware, such as enterprise-level servers. For example, the processors and data storage devices may comprise any type or combination of application servers, communication servers, web servers, super-computing servers, database servers, file servers, mail servers, proxy servers, and/or virtual servers. Further, the one or more processors are configured to access the memory and execute processor-readable instructions, which when executed by the processors configures the processors to perform a plurality of functions of the networked computing system environment 100.

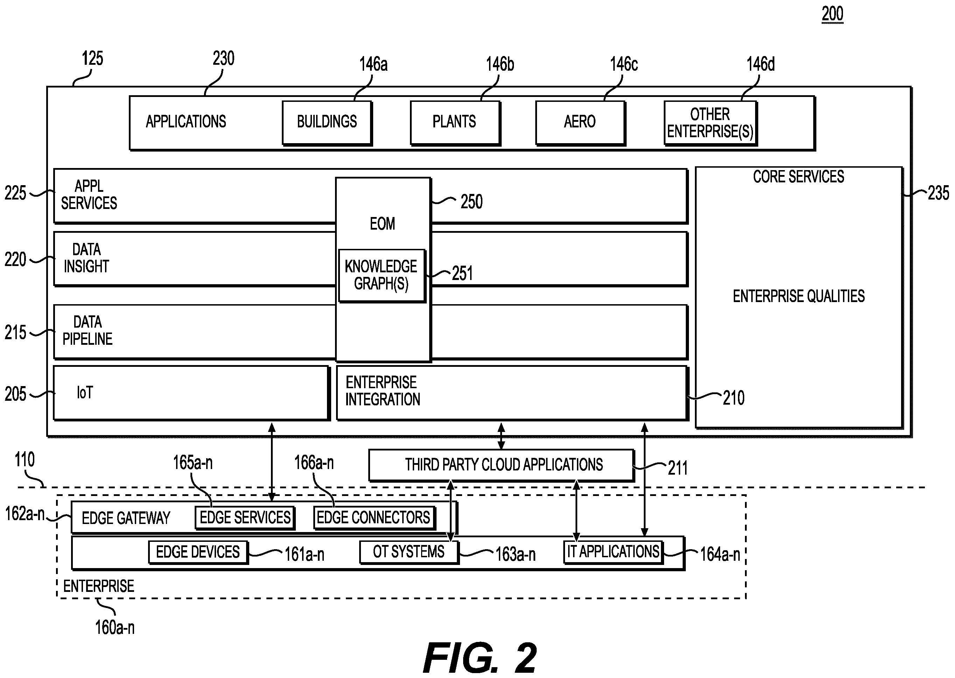

Computer systems 120 further include one or more software components of the loT platform 125. For example, the software components of computer systems 120 may include one or more software modules to communicate with user devices and/or other computing devices through network 110. For example, the software components may include one or more modules 141, models 142, engines 143, databases 144, services 145, and/or applications 146, which may be stored in/by the computer systems 120 (e.g., stored on the memory), as detailed with respect to FIG. 2 below. The one or more processors may be configured to utilize the one or more modules 141, models 142, engines 143, databases 144, services 145, and/or applications 146 when performing various methods described in this disclosure.

Accordingly, computer systems 120 may execute a cloud computing platform (e.g., loT platform 125) with scalable resources for computation and/or data storage, and may run one or more applications on the cloud computing platform to perform various computer-implemented methods described in this disclosure. In some embodiments, some of the modules 141, models 142, engines 143, databases 144, services 145, and/or applications 146 may be combined to form fewer modules, models, engines, databases, services, and/or applications. In some embodiments, some of the modules 141, models 142, engines 143, databases 144, services 145, and/or applications 146 may be separated into separate, more numerous modules, models, engines, databases, services, and/or applications. In some embodiments, some of the modules 141, models 142, engines 143, databases 144, services 145, and/or applications 146 may be removed while others may be added.

The computer systems 120 are configured to receive data from other components (e.g., components of the edge 115) of networked computing system environment 100 via network 110. Computer systems 120 are further configured to utilize the received data to produce a result. Information indicating the result may be transmitted to users via user computing devices over network 110. In some embodiments, the computer systems 120 may be referred to as a server system that provides one or more services including providing the information indicating the received data and/or the result(s) to the users. Computer systems 120 are part of an entity, which may include any type of company, organization, or institution that implements one or more loT services. In some examples, the entity may be an loT platform provider.

In an embodiment, cloud 105 may be operably coupled with a plurality of facilities or enterprises, meaning that communication between the cloud 105 and each of the facilities or enterprises is enabled. Operational data such as telemetry data and optionally associated metadata can be uploaded to the cloud 105 for processing. Telemetry data can include time stamps and data values corresponding to those time stamps. Instructions such as operational set points can be determined within the cloud 105 and can be downloaded to a particular facility or enterprise for execution. The operational set points may include, for example, air temperature, air humidity, delta pressure (e.g. for pump, fan or damper), pump speed, chilled water temperature, hot water temperature, etc.

In an embodiment, the cloud 105 may include a server that is programmed to communicate with the facilities or enterprises and to exchange data as appropriate. The cloud 105 may be a single computer server or may include a plurality of computer servers. In some embodiments, the cloud 105 may represent a hierarchal arrangement of two or more computer servers, where perhaps a lower level computer server (or servers) processes telemetry data, for example, while a higher-level computer server oversees operation of the lower level computer server or servers.

A facility or enterprise may include a variety of different devices and controllers that communicate in different data formats, in different languages and/or different protocols. A facility or enterprise may include a variety of different devices and controllers, at least some of which communicate on different types of networks.

Components of the edge 115 include one or more enterprises 160a-160n each including one or more edge devices 161a-161n and one or more edge gateways 162a-162n. For example, a first enterprise 160a includes first edge devices 161a and first edge gateways 162a, a second enterprise 160b includes second edge devices 161b and second edge gateways 162b, and an nth enterprise 160n includes nth edge devices 161n and nth edge gateways 162n. As used herein, enterprises 160a-160n may represent any type of entity, facility, or vehicle, such as, for example, companies, divisions, buildings, manufacturing plants, warehouses, real estate facilities, laboratories, aircraft, spacecraft, automobiles, ships, boats, military vehicles, oil and gas facilities, or any other type of entity, facility, and/or vehicle that includes any number of local devices.

The edge devices 161a-161n may represent any of a variety of different types of devices that may be found within the enterprises 160a-160n. Edge devices 161a-161n are any type of device configured to access network 110, or be accessed by other devices through network 110, such as via an edge gateway 162a-162n. Edge devices 161a-161n may be referred to in some cases as "IoT devices," which may therefore include any type of network-connected (e.g., Internet-connected) device. For example, the edge devices 161a-161n may include sensors, actuators, processors, computers, valves, pumps, ducts, vehicle components, cameras, displays, doors, windows, security components, HVAC components, factory equipment, and/or any other devices that may be connected to the network 110 for collecting, sending, and/or receiving information. Each edge device 161a-161n includes, or is otherwise in communication with, one or more controllers for selectively controlling a respective edge device 161a-161n and/or for sending/receiving information between the edge devices 161a-161n and the cloud 105 via network 110. With reference to FIG. 2, the edge 115 may also include operational technology (OT) systems 163a-163n and information technology (IT) applications 164a-164n of each enterprise 161a-161n. The OT systems 163a-163n include hardware and software for detecting and/or causing a change, through the direct monitoring and/or control of industrial equipment (e.g., edge devices 161a-161n), assets, processes, and/or events. The IT applications 164a-164n include network, storage, and computing resources for the generation, management, storage, and delivery of data throughout and between organizations.

The edge gateways 162a-162n include devices for facilitating communication between the edge devices 161a-161n and the cloud 105 via network 110. For example, the edge gateways 162a-162n include one or more communication interfaces for communicating with the edge devices 161a-161n and for communicating with the cloud 105 via network 110. The communication interfaces of the edge gateways 162a-162n may include one or more cellular radios, Bluetooth, WiFi, near-field communication radios, Ethernet, or other appropriate communication devices for transmitting and receiving information. Multiple communication interfaces may be included in each gateway 162a-162n for providing multiple forms of communication between the edge devices 161a-161n, the gateways 162a-162n, and the cloud 105 via network 110. For example, communication may be achieved with the edge devices 161a-161n and/or the network 110 through wireless communication (e.g., WiFi, radio communication, etc.) and/or a wired data connection (e.g., a universal serial bus, an onboard diagnostic system, etc.) or other communication modes, such as a local area network (LAN), wide area network (WAN) such as the Internet, a telecommunications network, a data network, or any other type of network.

The edge gateways 162a-162n may also include a processor and memory for storing and executing program instructions to facilitate data processing. For example, the edge gateways 162a-162n can be configured to receive data from the edge devices 161a-161n and process the data prior to sending the data to the cloud 105. Accordingly, the edge gateways 162a-162n may include one or more software modules or components for providing data processing services and/or other services or methods of the present disclosure. With reference to FIG. 2, each edge gateway 162a-162n includes edge services 165a-165n and edge connectors 166a-166n. The edge services 165a-165n may include hardware and software components for processing the data from the edge devices 161a-161n. The edge connectors 166a-166n may include hardware and software components for facilitating communication between the edge gateway 162a-162n and the cloud 105 via network 110, as detailed above. In some cases, any of edge devices 161a-n, edge connectors 166a-n, and edge gateways 162an may have their functionality combined, omitted, or separated into any combination of devices. In other words, an edge device and its connector and gateway need not necessarily be discrete devices.

According to an example embodiment, the edge gateways 162a-162n may be configured to receive at least one of telemetry data and model data from various physical assets of a facility or enterprise (e.g., but not limited to, a building, an industrial site, a vehicle, a warehouse, an aircraft etc.). In some examples, the telemetry data can represent time-series data and may include a plurality of data values associated with the assets which can be collected over a period of time. For instance, in an example, the telemetry data may represent a plurality of sensor readings collected by a sensor over a period of time. Further, the model data can represent meta-data associated with the assets. The model data can be indicative of ancillary or contextual information associated with the asset. For instance, in an example, the model data can be representative of a geographical information associated with the asset (e.g. location of the asset) within a facility. In another example, the model data can represent a sensor setting based on which a sensor is commissioned within a facility. In yet another example, the model data can be representative of a data type or a data format associated with the data transacted through the asset. In yet another example, the model data can be indicative of any information which can define a relationship of the asset with the other assets in a facility. In accordance with various example embodiments described herein, the term 'model data' can be referred interchangeably as 'semantic model' or 'metadata' for purpose of brevity.

In accordance with an example embodiment, the edge gateways 162a-162n are configured to discover and identify one or more local devices and/or any other physical assets which are communicatively coupled to the edge gateways 162a-162n. Further, upon identification of the assets, the edge gateways 162a-162n are configured to pull the telemetry data and/or the model data from the various assets. In an example, these assets can correspond to one or more electronic devices that may be located on-premises in a facility. The edge gateways 162a-162n are configured to pull the data by sending one or more data interrogation requests to the assets. These data interrogation requests can be based on a protocol supported by an underlying physical asset. Examples of discovery and identification of assets in a facility are described in a US Patent Application no. US 16/888,626, titled "Remote discovery of building management system metadata", filed on 29 May 2020, the details of which are incorporated herein in their entirety.

In accordance with said example embodiment, the edge gateways 162a-162n are configured to receive the telemetry data and/or the model data in various data formats or different data structures. In an example, a format of the telemetry data and/or the model data, received at the edge gateways 162a-162n may be in accordance with a communication protocol of the network supporting transaction of data amongst two or more network nodes (i.e. the edge gateways 162a-162n and the asset). As can be appreciated, in some examples, each asset in a facility can be support different network protocols (e.g., IOT protocols like BACnet, Modbus, LonWorks, SNMP, MQTT, Foxs, OPC UA etc.). Accordingly, the edge gateways 162a-162n are configured to pull the telemetry data and/or the model data, in accordance with communication protocol supported by an underlying local device (i.e. asset).

Further, the edge gateways 162a-162n are configured to process the received data and transform the data into unified data format. The unified data format is referred hereinafter as a common object model (COM). In an example, the COM is in accordance with an object model that may be required by one or more data analytics applications or services, supported at the cloud 105. In an example embodiment, the edge gateways 162a-162n can perform data normalization to normalize the received data into a pre-defined data format. In an example, the pre-defined format can represent a COM based on which the edge gateways 162a-162n can further push the telemetry data and/or the model data to the cloud 106. In some examples, the edge gateways 162a-162n are configured to establish a secure communication channel with the cloud 105. In this regard, the data can be transacted between the edge gateways 162a-162n and the cloud 105, via a secure communication channel.

In accordance with said example embodiment, the edge gateways 162a-162n are configured to perform at least one of: (a) receiving at least one of: telemetry data and the model data from the assets, (b) normalizing the data which can include transforming the received data from a first format into a second format that supports a COM, and (c) sending the transformed data representative of the COM to the cloud 105. In accordance with some example embodiments, the edge gateways 162a-162n are configured to receive and aggregate the data (e.g., but not limited to, telemetry data and/or model data) from multiple sources in a facility. For instance, the data and/or metadata information can be received and/or pulled from multiple assets corresponding to various independent and diverse sub-systems in the facility. Furthermore, as described earlier, the edge gateways 162a-162n are configured to normalize the received data and send the normalized data to the cloud 105. In an example, the edge gateways 162a-162n can send the transformed data based on a data pull request received from the cloud 105. In another example, the edge gateways 162a-162n can send the transformed data automatically at pre-defined time intervals.

In an example embodiment, the edge gateways 162a-162n are configured to define a protocol for performing at least one of: (a) data ingress from the one or more assets to the edge gateways 162a-162n, (b) data normalization (e.g. normalizing the data into a COM), and (c) data egress for pushing the data out from the edge gateways 162a-162n (for example, to the cloud 105) In this regard, the edge gateways 162a-162n can be configured to define one or more rules based on which the data (i.e. the telemetry data and/or the model data) can be ingress by the edge gateways 162a-162n for further processing. Further, the edge gateways 162a-162n can define rules for normalizing the data in accordance with a COM, as described earlier. Furthermore, the edge gateways 162a-162n can include a rule engine that can be configured to define rules for egressing the data and/or a transformed version of the data (e.g. the normalized data) out from the edge gateways 162a-162n. In some examples, the edge gateways 162a-162n can ingress the data and further push the data into a data lake (e.g. a data pipeline). In an example, the data lake can be managed by the edge gateways 162a-162n and/or the cloud 105.

In accordance with an example embodiment, the edge gateways 162a-162n are configured to support one or more containerized packages. These containerized packages include one or more applications, drivers, firmware executable files, services, or the like, that can be configured based on configuration information from the cloud 105. These containerized packages supported at the edge gateways 162a-162n can pull the telemetry data and/or the model data from the one or more assets in the facility. Further, in accordance with some example embodiments, the edge gateways 162a-162n are configured to utilize the containerized packages to perform one or more operations corresponding to at least one of: the data ingress, the data normalization, and the data egress, as described earlier. Furthermore, the containerized packages can be configured to control one or more operations associated with the assets of the facility.

In accordance with some example embodiments, the containerized packages can include one or more drivers that can be configured to auto-discover and identify one or more assets in a facility. In this regard, the containerized packages can enable the edge gateways 162a-162n to remotely access the assets, identify the one or more assets based on the interrogation of the assets, and configure one or more data transaction capabilities of the assets. The data transaction capability referred herein can for example indicate, what data is to be pulled from an asset or how frequent data is to be pulled from the asset, or what metadata is to be pulled from the asset. In accordance with said example embodiments, the containerized packages can be utilized to configure at least one of: (a) a selection of data which is to be pulled from an asset, (b) a frequency at which the data is to be pulled from an asset, (c) selection of an asset from amongst the multiple assets from which the data is to be requested by the edge gateways 162a-162n, (d) a selection of metadata associated with an asset which is to be requested by the edge gateways 162a-162n. In an example embodiment, a containerized package at the edge gateways 162a-162n can include one or more of: drivers, native firmware, library files, application file, and/or executable files that can enable one or more functions as described herein, with respect to the edge gateways 162a-162n.

According to some example embodiments, the containerized packages can be configured to pull the data from the assets onto the edge gateways 162a-162n by sending data interrogation requests to various assets. These data interrogation assets can be defined in a format in accordance with a network protocol supported by the assets. Typically, various assets of a facility may support different network protocols (e.g. IOT based protocols like BACnet, Modbus, Foxs, OPC UA, Obix, SNMP, MQTT etc.). In some example embodiments, the containerized packages are customizable and user-configurable so as to cater any type of asset supported by any network protocol. In other words, the containerized packages can be configured to pull the data and/or the metadata from various assets regardless of an underlying network protocol for communication with an asset. In accordance with some example embodiments, the edge gateways 162a-162n can support the one or more containerized packages that can cause automatic discovery and identification of assets of various subsystems in a facility regardless of an asset type (e.g. modern sub-system or legacy sub-system, OEM manufactured, native asset etc.).

As described earlier, the edge gateways 162a-162n are configured to capture the data (e.g. the telemetry data and the semantic model) from various assets in the facility. Further, the edge gateways 162a-162n are configured to provide at least one of: the data and a COM determined from the data, to the cloud 105. In some example embodiments, the cloud 105 can further process the data and/or the COM to create an extended object model (EOM). An extended object model is representative of a data model which unifies several data ontologies, data relationships, and data hierarchies into a unified format. The EOM can be utilized for further data analytics and reporting one or more KPIs, contextual insights, performance, and operational insights of a facility.

In some embodiments, the COM and/or the EOM may generate and/or suggest filter tags for the data. In other words, the COM and/or the EOM may ingest telemetry data and, using contextual information about the data (e.g. the semantic model), may assign filter tags to the data. The filter tags may accordingly be used to filter the potentially large amounts of data to desired granularity.
In some embodiments, the COM and/or the EOM may assign geographic filter tags, filter tags identifying specific facilities, asset type filter tags, attribute filter tags, time series filter tags, or any other type of filter tags useful for sorting the data. For example, for a data element indicative of energy consumed by an individual boiler in a warehouse in Bangalore, the COM and/or the EOM may apply filter tags indicative of one or more of: the boiler, the system with which the boiler is associated, the warehouse, Bangalore, energy consumption, the sensor or meter used to detect the energy consumption, and the like. The COM and/or the EOM may assign filter tags to each data element ingested and/or maintained therein.

FIG. 2 illustrates a schematic block diagram of framework 200 of the loT platform 125, according to the present disclosure. The loT platform 125 of the present disclosure is a platform for enterprise performance management that uses real-time accurate models and visual analytics to deliver intelligent actionable recommendations for sustained peak performance of the enterprise 160a-160n. The loT platform 125 is an extensible platform that is portable for deployment in any cloud or data center environment for providing an enterprise-wide, top to bottom view, displaying the status of processes, assets, people, and safety. Further, the loT platform 125 supports end-to-end capability to execute digital twins against process data and to translate the output into actionable insights, using the framework 200, detailed further below.

As shown in FIG. 2, the framework 200 of the loT platform 125 comprises a number of layers including, for example, an loT layer 205, an enterprise integration layer 210, a data pipeline layer 215, a data insight layer 220, an application services layer 225, and an applications layer 230. The loT platform 125 also includes a core services layer 235 and an extensible object model (EOM) 250 comprising one or more knowledge graphs 251. The layers 205-235 further include various software components that together form each layer 205-235. For example, each layer 205-235 may include one or more of the modules 141, models 142, engines 143, databases 144, services 145, applications 146, or combinations thereof. In some embodiments, the layers 205-235 may be combined to form fewer layers. In some embodiments, some of the layers 205-235 may be separated into separate, more numerous layers. In some embodiments, some of the layers 205-235 may be removed while others may be added.

The loT platform 125 is a model-driven architecture. Thus, the extensible object model 250 communicates with each layer 205-230 to contextualize site data of the enterprise 160a-160n using an extensible object model (or "asset model") and knowledge graphs 251 where the equipment (e.g., edge devices 161a-161n) and processes of the enterprise 160a-160n are modeled. The knowledge graphs 251 of EOM 250 are configured to store the models in a central location. The knowledge graphs 251 define a collection of nodes and links that describe real-world connections that enable smart systems. As used herein, a knowledge graph 251: (i) describes real-world entities (e.g., edge devices 161a-161n) and their interrelations organized in a graphical interface; (ii) defines possible classes and relations of entities in a schema; (iii) enables interrelating arbitrary entities with each other; and (iv) covers various topical domains. In other words, the knowledge graphs 251 define large networks of entities (e.g., edge devices 161a-161n), semantic types of the entities, properties of the entities, and relationships between the entities. Thus, the knowledge graphs 251 describe a network of "things" that are relevant to a specific domain or to an enterprise or organization. Knowledge graphs 251 are not limited to abstract concepts and relations, but can also contain instances of objects, such as, for example, documents and datasets. In some embodiments, the knowledge graphs 251 may include resource description framework (RDF) graphs. As used herein, a "RDF graph" is a graph data model that formally describes the semantics, or meaning, of information. The RDF graph can also represent metadata (e.g., data that describes data). Knowledge graphs 251 can also include a semantic object model. The semantic object model is a subset of a knowledge graph 251 that defines semantics for the knowledge graph 251. For example, the semantic object model defines the schema for the knowledge graph 251.

As used herein, EOM 250 is a collection of application programming interfaces (APIs) that enables seeded semantic object models to be extended. For example, the EOM 250 of the present disclosure enables a customer's knowledge graph 251 to be built subject to constraints expressed in the customer's semantic object model. Thus, the knowledge graphs 251 are generated by customers (e.g., enterprises or organizations) to create models of the edge devices 161a-161n of an enterprise 160a-160n, and the knowledge graphs 251 are input into the EOM 250 for visualizing the models (e.g., the nodes and links).

The models describe the assets (e.g., the nodes) of an enterprise (e.g., the edge devices 161a-161n) and describe the relationship of the assets with other components (e.g., the links). The models also describe the schema (e.g., describe what the data is), and therefore the models are self-validating. For example, the model can describe the type of sensors mounted on any given asset (e.g., edge device 161a-161n) and the type of data that is being sensed by each sensor. A key performance indicator (KPI) framework can be used to bind properties of the assets in the extensible object model 250 to inputs of the KPI framework. Accordingly, the loT platform 125 is an extensible, model-driven end-to-end stack including: two-way model sync and secure data exchange between the edge 115 and the cloud 105, metadata driven data processing (e.g., rules, calculations, and aggregations), and model driven visualizations and applications. As used herein, "extensible" refers to the ability to extend a data model to include new properties/columns/fields, new classes/tables, and new relations. Thus, the loT platform 125 is extensible with regards to edge devices 161a-161n and the applications 146 that handle those devices 161a-161n. For example, when new edge devices 161a-161n are added to an enterprise 160a-160n system, the new devices 161a-161n will automatically appear in the loT platform 125 so that the corresponding applications 146 can understand and use the data from the new devices 161a-161n.

In some cases, asset templates are used to facilitate configuration of instances of edge devices 161a-161n in the model using common structures. An asset template defines the typical properties for the edge devices 161a-161n of a given enterprise 160a-160n for a certain type of device. For example, an asset template of a pump includes modeling the pump having inlet and outlet pressures, speed, flow, etc. The templates may also include hierarchical or derived types of edge devices 161a-161n to accommodate variations of a base type of device 161a-161n. For example, a reciprocating pump is a specialization of a base pump type and would include additional properties in the template. Instances of the edge device 161a-161n in the model are configured to match the actual, physical devices of the enterprise 160a-160n using the templates to define expected attributes of the device 161a-161n. Each attribute is configured either as a static value (e.g., capacity is 1000 BPH) or with a reference to a time series tag that provides the value. The knowledge graph 251 can automatically map the tag to the attribute based on naming conventions, parsing, and matching the tag and attribute descriptions and/or by comparing the behavior of the time series data with expected behavior.

The modeling phase includes an onboarding process for syncing the models between the edge 115 and the cloud 105. For example, the onboarding process can include a simple onboarding process, a complex onboarding process, and/or a standardized rollout process. The simple onboarding process includes the knowledge graph 251 receiving raw model data from the edge 115 and running context discovery algorithms to generate the model. The context discovery algorithms read the context of the edge naming conventions of the edge devices 161a-161n and determine what the naming conventions refer to. For example, the knowledge graph 251 can receive "TMP" during the modeling phase and determine that "TMP" relates to "temperature." The generated models are then published. The complex onboarding process includes the knowledge graph 251 receiving the raw model data, receiving point history data, and receiving site survey data. The knowledge graph 251 can then use these inputs to run the context discovery algorithms. The generated models can be edited and then the models are published. The standardized rollout process includes manually defining standard models in the cloud 105 and pushing the models to the edge 115.

The loT layer 205 includes one or more components for device management, data ingest, and/or command/control of the edge devices 161a-161n. The components of the loT layer 205 enable data to be ingested into, or otherwise received at, the loT platform 125 from a variety of sources. For example, data can be ingested from the edge devices 161a-161n through process historians or laboratory information management systems. The loT layer 205 is in communication with the edge connectors 165a-165n installed on the edge gateways 162a-162n through network 110, and the edge connectors 165a-165n send the data securely to the loT layer 205. In some embodiments, only authorized data is sent to the loT platform 125, and the loT platform 125 only accepts data from authorized edge gateways 162a-162n and/or edge devices 161a-161n. Data may be sent from the edge gateways 162a-162n to the loT platform 125 via direct streaming and/or via batch delivery. Further, after any network or system outage, data transfer will resume once communication is re-established and any data missed during the outage will be backfilled from the source system or from a cache of the loT platform 125. The loT layer 205 may also include components for accessing time series, alarms and events, and transactional data via a variety of protocols.

The enterprise integration layer 210 includes one or more components for events/messaging, file upload, and/or REST/OData. The components of the enterprise integration layer 210 enable the loT platform 125 to communicate with third party cloud applications 211, such as any application(s) operated by an enterprise in relation to its edge devices. For example, the enterprise integration layer 210 connects with enterprise databases, such as guest databases, customer databases, financial databases, patient databases, etc. The enterprise integration layer 210 provides a standard application programming interface (API) to third parties for accessing the loT platform 125. The enterprise integration layer 210 also enables the loT platform 125 to communicate with the OT systems 163a-163n and IT applications 164a-164n of the enterprise 160a-160n. Thus, the enterprise integration layer 210 enables the loT platform 125 to receive data from the third party applications 211 rather than, or in combination with, receiving the data from the edge devices 161a-161n directly.

The data pipeline layer 215 includes one or more components for data cleansing/enriching, data transformation, data calculations/aggregations, and/or API for data streams. Accordingly, the data pipeline layer 215 can pre-process and/or perform initial analytics on the received data. The data pipeline layer 215 executes advanced data cleansing routines including, for example, data correction, mass balance reconciliation, data conditioning, component balancing and simulation to ensure the desired information is used as a basis for further processing. The data pipeline layer 215 also provides advanced and fast computation. For example, cleansed data is run through enterprise-specific digital twins. The enterprise-specific digital twins can include a reliability advisor containing process models to determine the current operation and the fault models to trigger any early detection and determine an appropriate resolution. The digital twins can also include an optimization advisor that integrates real-time economic data with real-time process data, selects the right feed for a process, and determines optimal process conditions and product yields.

The data pipeline layer 215 may also use models and templates to define calculations and analytics, and define how the calculations and analytics relate to the assets (e.g., the edge devices 161a-161n). For example, a pump template can define pump efficiency calculations such that every time a pump is configured, the standard efficiency calculation is automatically executed for the pump. The calculation model defines the various types of calculations, the type of engine that should run the calculations, the input and output parameters, the preprocessing requirement and prerequisites, the schedule, etc. The actual calculation or analytic logic may be defined in the template or it may be referenced. Thus, the calculation model can be used to describe and control the execution of a variety of different process models. Calculation templates can be linked with the asset templates such that when an asset (e.g., edge device 161a-161n) instance is created, any associated calculation instances are also created with their input and output parameters linked to the appropriate attributes of the asset (e.g., edge device 161a-161n).

The loT platform 125 can support a variety of different analytics models including, for example, first principles models, empirical models, engineered models, user-defined models, machine learning models, built-in functions, and/or any other types of analytics models. Fault models and predictive maintenance models will now be described by way of example, but any type of models may be applicable.

Fault models are used to compare current and predicted enterprise 160a-160n performance to identify issues or opportunities, and the potential causes or drivers of the issues or opportunities. The loT platform 125 includes rich hierarchical symptom-fault models to identify abnormal conditions and their potential consequences. For example, the loT platform 125 can drill down from a high-level condition to understand the contributing factors, as well as determining the potential impact a lower level condition may have. There may be multiple fault models for a given enterprise 160a-160n looking at different aspects such as process, equipment, control, and/or operations. Each fault model can identify issues and opportunities in their domain, and can also look at the same core problem from a different perspective. An overall fault model can be layered on top to synthesize the different perspectives from each fault model into an overall assessment of the situation and point to the true root cause.

When a fault or opportunity is identified, the loT platform 125 can make recommendations about the best corrective actions to take. Initially, the recommendations are based on expert knowledge that has been pre-programmed into the system by process and equipment experts. A recommendation services module presents this information in a consistent way regardless of source, and supports workflows to track, close out, and document the recommendation follow-up. The recommendation follow-up can be used to improve the overall knowledge of the system over time as existing recommendations are validated (or not) or new cause and effect relationships are learned by users and/or analytics.

The models can be used to accurately predict what will occur before it occurs and interpret the status of the installed base. Thus, the loT platform 125 enables operators to quickly initiate maintenance measures when irregularities occur. The digital twin architecture of the loT platform 125 can use a variety of modeling techniques. The modeling techniques can include, for example, rigorous models, fault detection and diagnostics (FDD), descriptive models, predictive maintenance, prescriptive maintenance, process optimization, and/or any other modeling technique.

The rigorous models can be converted from process design simulation. In this manner, process design is integrated with feed conditions and production requirement. Process changes and technology improvement provide business opportunities that enable more effective maintenance schedule and deployment of resources in the context of production needs. The fault detection and diagnostics include generalized rule sets that are specified based on industry experience and domain knowledge and can be easily incorporated and used working together with equipment models. The descriptive models identify a problem and then the predictive models can determine possible damage levels and maintenance options. The descriptive models can include models for defining the operating windows for the edge devices 161a-161n.

Predictive maintenance includes predictive analytics models developed based on rigorous models and statistic models, such as, for example, principal component analysis (PCA) and partial least square (PLS). Machine learning methods can be applied to train models for fault prediction. Predictive maintenance can leverage FDD-based algorithms to continuously monitor individual control and equipment performance. Predictive modeling is then applied to a selected condition indicator that deteriorates in time. Prescriptive maintenance includes determining what is the best maintenance option and when it should be performed based on actual conditions rather than time-based maintenance schedule. Prescriptive analysis can select the right solution based on the company's capital, operational, and/or other requirements. Process optimization is determining optimal conditions via adjusting set-points and schedules. The optimized set-points and schedules can be communicated directly to the underlying controllers, which enables automated closing of the loop from analytics to control.

The data insight layer 220 includes one or more components for time series databases (TSDB), relational/document databases, data lakes, blob, files, images, and videos, and/or an API for data query. When raw data is received at the loT platform 125, the raw data can be stored as time series tags or events in warm storage (e.g., in a TSDB) to support interactive queries and to cold storage for archive purposes. Data can further be sent to the data lakes for offline analytics development. The data pipeline layer 215 can access the data stored in the databases of the data insight layer 220 to perform analytics, as detailed above.

The application services layer 225 includes one or more components for rules engines, workflow/notifications, KPI framework, BI, machine learning, and/or an API for application services. The application services layer 225 enables building of applications 146a-d. The applications layer 230 includes one or more applications 146a-d of the loT platform 125. For example, the applications 146a-d can include a buildings application 146a, a plants application 146b, an aero application 146c, and other enterprise applications 146d. The applications 146 can include general applications 146 for portfolio management, asset management, autonomous control, and/or any other custom applications. Portfolio management can include the KPI framework and a flexible user interface (Ul) builder. Asset management can include asset performance and asset health. Autonomous control can include energy optimization and predictive maintenance. As detailed above, the general applications 146 can be extensible such that each application 146 can be configurable for the different types of enterprises 160a-160n (e.g., buildings application 146a, plants application 146b, aero application 146c, and other enterprise applications 146d).

The applications layer 230 also enables visualization of performance of the enterprise 160a-160n. For example, dashboards provide a high-level overview with drill-downs to support deeper investigations. Recommendation summaries give users prioritized actions to address current or potential issues and opportunities. Data analysis tools support ad hoc data exploration to assist in troubleshooting and process improvement.

The core services layer 235 includes one or more services of the loT platform 125. The core services layer 235 can include data visualization, data analytics tools, security, scaling, and monitoring. The core services layer 235 can also include services for tenant provisioning, single login/common portal, self-service admin, UI library/UI tiles, identity/access/entitlements, logging/monitoring, usage metering, API gateway/dev portal, and the loT platform 125 streams.

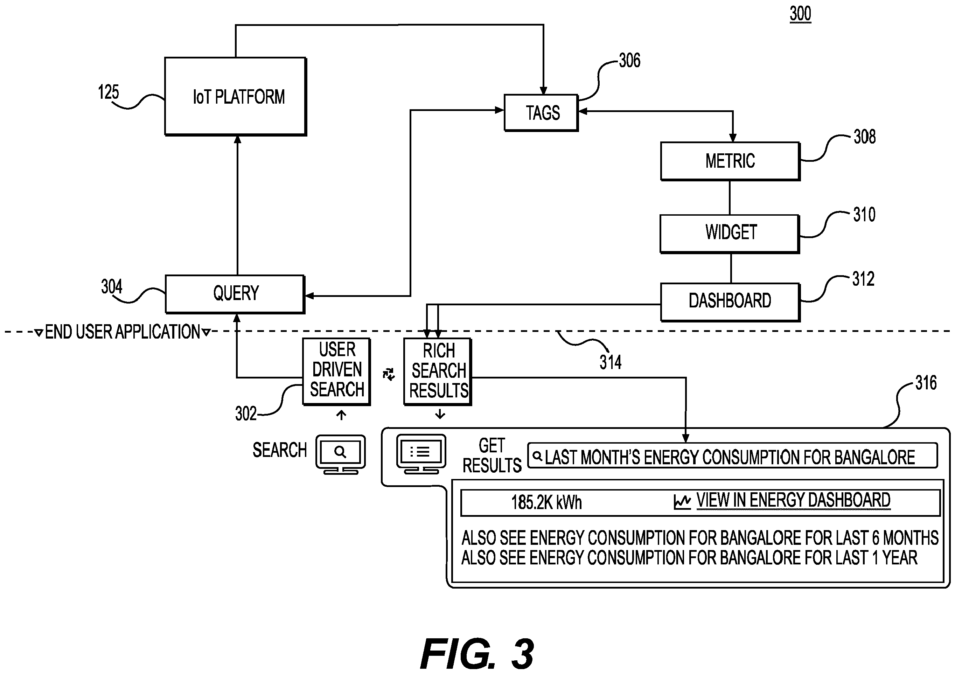

With reference to FIGS. 3, 4, 5A, 5B, 6, 7, 8, and 9, features of a graphical UI for the loT platform 125 will be hereinafter described in detail. The features described herein relate generally to navigation of the UI so that a user may easily and efficiently access the various data and information provided by loT platform 125. The UI may be accessed via a user device such as, for example, a desktop computer, a mobile device, etc. In some embodiments, the user device may be a cellphone, a tablet, an artificial reality AR device such as a headset, or the like. In some embodiments, the user device may include one or more end user application(s), e.g., a program, plugin, browser, browser extension, etc., installed on a memory of the user device. The end user application(s) may be associated with the loT platform 125 and may allow a user of the user device to access features and/or information provided by loT platform 125. In some embodiments, the end user application may be a browser and loT platform 125 may be made available to the user via a web-based application.

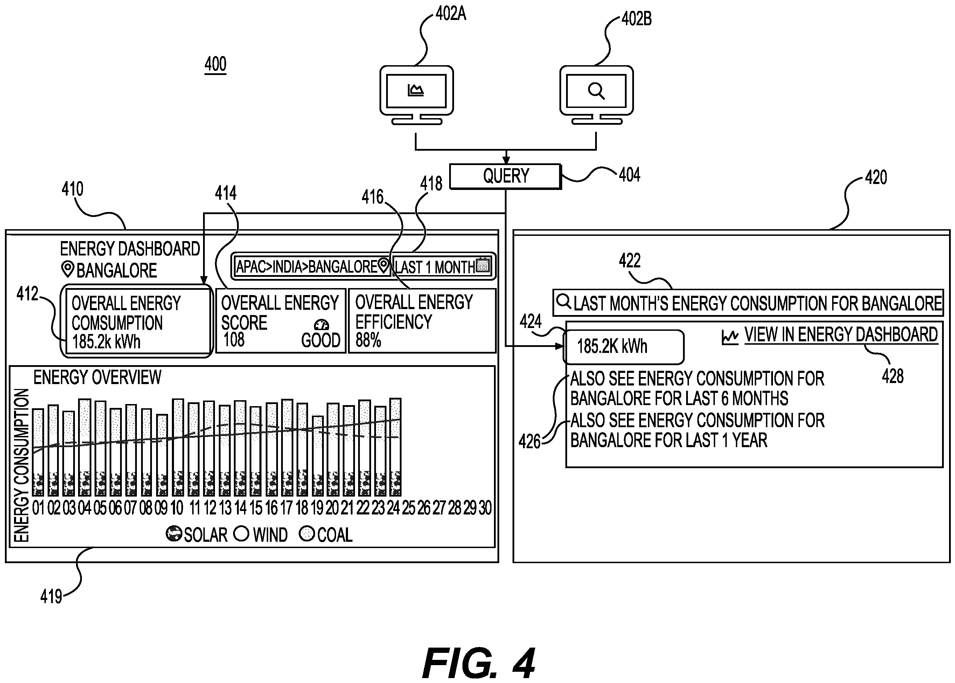

FIG. 3 illustrates a schematic diagram of a system 300 for navigating a UI of the loT platform 125 via an end user application, according to the present disclosure. The end user application on the user device may include a user driven search 302. The user driven search 302 may be a prompt in the UI of the end user application via which the user may provide search parameters as input. The search parameters may be, for example, a text string, a verbal command, one or more filter tags, one or more images, or any other suitable type of search parameters. Examples of search parameters will be described in greater detail hereinafter, including with reference to FIGS. 4, 5A, 5B, and 6.

The system 300 may then match the search parameters input to the user driven search 302 to a pre-existing query 304. The query 304 may be configured to retrieve data items from loT platform 125. Pre-existing query 304 may be powered by tags 306 (also referred to herein as "filter tags"). Tags 306 may be automatically generated by loT platform 125 for each asset and/or each data item represented on loT platform 125. Tags 306 may include, for example, asset types, asset attributes, KPIs, metrics, regions, locations, enterprise names, event identifiers, dashboard identifiers, widget identifiers, process identifiers, and the like.

Based on particular filter tags from tags 306 that are included in query 304, query 304 may retrieve one or more data items from loT platform 125 to identify and/or create metric 308. Metric 308 may itself be part of a widget 310, which in turn may be part of a dashboard 312. At least one of the metric 308, widget 310, and/or dashboard 312 may be returned as rich search results 314 for display on the UI of the end user application.

As shown in FIG. 3, the search results may manifest as widget 316 on the UI of the end user application. Widget 316 may include the text string input as a search parameter-"last month's energy consumption for Bangalore"-and the resulting metric-"185.2k kWh." The displayed metric may be retrieved from loT platform 125 because it is associated with the filter tags powering query 304 to which the text string was matched.

In some embodiments, widget 316 may be a widget included in a pre-existing dashboard available to the user within the end user application. For example, the user may be able to navigate to widget 316 by making a series of selections through the end user application to determine last month's energy consumption for Bangalore. If the user understands how to navigate the end user application and makes the appropriate series of selections, the user may arrive at widget 316 to display the metric (185.2k kWh). On the other hand, as shown in FIG. 3, by matching the input search parameters to query 304, system 300 may be able to navigate to the same widget 316 more directly and easily to provide the user with the same desired metric.

FIG. 4 depicts, in schematic form, an exemplary relationship between a queried widget and a widget in a dashboard in accordance with the present disclosure. As shown in FIG. 4, system 400 may prompt a user to navigate the UI via a dashboard navigator 402A or a search navigator 402B. In some embodiments, the user may be able to toggle between dashboard navigator 402A and search navigator 402B. Depending on the selections made by the user in dashboard navigator 402A and the search parameters entered into the search navigator 402B, each of dashboard navigator 402A and search navigator 402B may generate the same query 404 to retrieve data from loT platform 125.

In the case of dashboard navigator 402A, query 404 may return the requested information as part of a dashboard window 410. The dashboard window 410 may include a first widget 412 showing a metric corresponding to the overall energy consumption for Bangalore over the last one month. Dashboard window 410 may also include a second widget 414, a third widget 416, and a fourth widget 419, each of which may display a metric and/or a chart related to energy in Bangalore. Dashboard window 410 may further include drop-down boxes 418, whereby a user may select a location and a time period for the displayed metrics and/or charts.

In the case of search navigator 402B, query 404 may return the request information as part of a search results window 420. Search results window 420 may include a search prompt 422 showing a text string entered as search parameters by the user. Search results window 420 may further include a fifth widget 424, suggestion links 426, and a dashboard link 428.

Fifth widget 424 may be essentially the same as first widget 412 and may show the same metric for energy consumption in Bangalore. Suggestion links 426 may allow the user to navigate to widgets with similar metrics. Dashboard link 428 may allow the user to navigate to dashboard window 410 from search results window 420.

In some embodiments, one or more of the components of dashboard window 410 and/or search results window 420 may be dynamically updated in real time in response to user input. In some embodiments, dashboard window 410 may be updated in real time in response to selections made by the user. For example, if the user selects London instead of Bangalore, dashboard window 410 and the components thereof, such as first widget 412, second widget 414, third widget 416 and/or fourth widget 419, may be updated to reflect data relating to facilities in London. Similarly, in some embodiments, search results window 420 may be updated as the user enters or changes search parameters in search prompt 422. As one example, if the user deletes the city "BANGALORE" from search prompt 422 and substitutes the city "LONDON," search results window 420 and the components thereof, such as fifth widget 424, suggestion links 426, and/or dashboard link 428, may be updated to reflect data relating to London. As another example, as the user initially populates search prompt 422 with the text "LAST MONTH'S ENERGY" before completing the text string shown in FIG. 4, search results window 420 may reflect all energy-related data without geographic limitation. As the user completes the text string, search results window 420 may be updated such that the displayed data is narrowed to consumption-related data and then further narrowed to data relating to Bangalore.

By this configuration, system 400 may allow a user to navigate to the same metric in at least two different ways: by navigating through a dashboard and by entering search parameters. As both navigation methods utilize the same query 404 to retrieve essentially the same widget 412 or 424 with the same metric, the system may eliminate any need to maintain multiple queries and multiple widgets to achieve the same essential task of displaying the metric to the user.

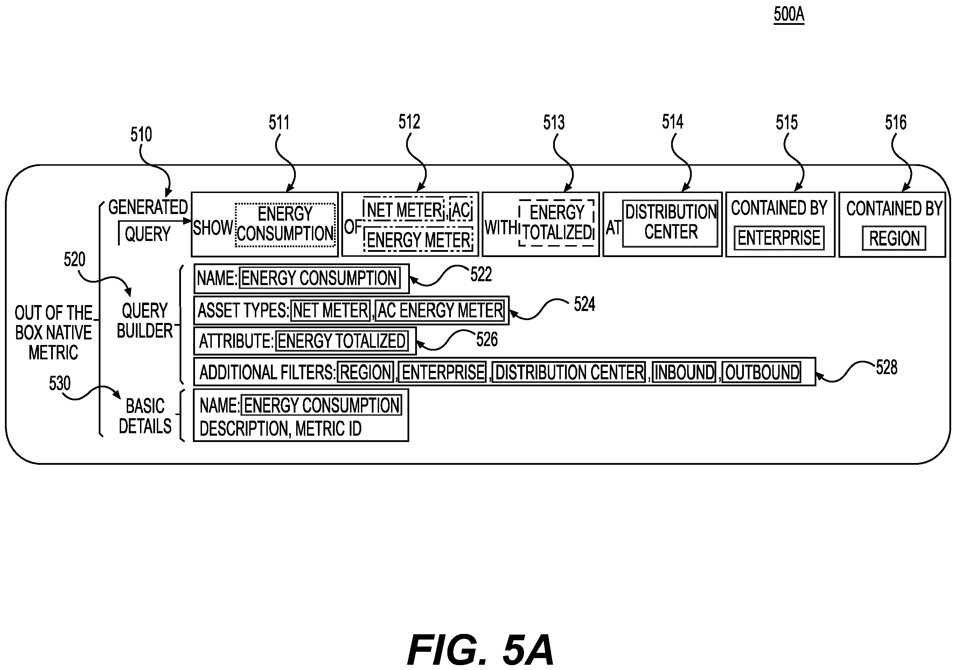

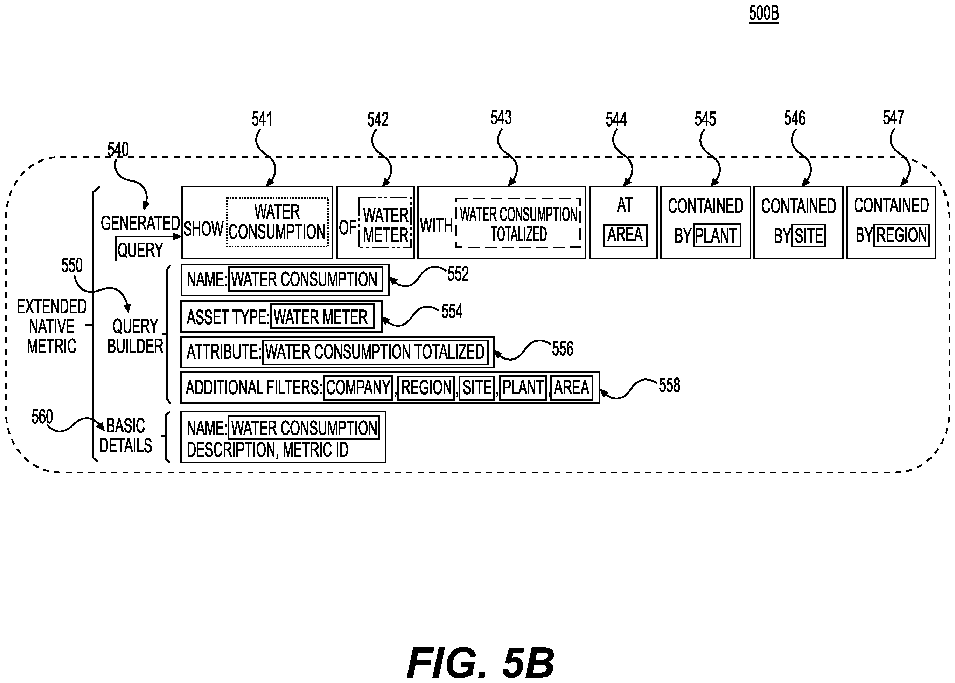

FIGS. 5A and 5B illustrate exemplary query tools 500A and 500B that may be used with system 300. In some embodiments, query tools 500A and 500B may be user-friendly UI features of the end user application with which a user may create a query without the need for creating or entering code. Query tools 500A and 500B may further be used as a prompt for search parameters at user driven search 302 or may be used to generate pre-existing queries such as query 304.

As shown in FIG. 5A, query tool 500A may show a generated query 510, a query builder 520, and basic details 530. Query builder 520 may be a section of query tool 500A in which the user may aggregate filter tags to create generated query 510. For example, query builder 520 may include a plurality of sections, such as name section 522, asset types section 524, attribute section 526, and additional filters section 528. Each of the sections may have a set of filter tags allocated to and/or selectable for them. For example, a set of filter tags corresponding to names of metrics may be allocated to name section 522. As shown in FIG. 5A, the user may select a filter tag titled "Energy Consumption" for name section 522. Alternatively, name section 522 may allow the user to enter text to create a custom name for a particular metric.

As further shown in FIG. 5A, the user may select filter tags titled "Net Meter" and "AC Energy Meter" for asset types section 524. These filter tags may be selected from a set of filter tags indicative of various assets (or edge devices). The filter tags selected for asset types section 524 may be indicative of particular types of assets and may serve to filter the queried data down to data related to those types of assets. As shown, the filter tags selected for asset types section 524 may include "Net Meter" and "AC Energy Meter," among others. The user may further select a filter tag titled "Energy Totalized" for attribute section 526. "Energy Totalized" may be selected from a set of filter tags indicative of various attributes for the assets recognized by the system. In some embodiments, "Energy Totalized" may be selected from a set of filter tags available for and/or associated with the filter tags already selected for asset types section 524. The "Energy Totalized" filter tag may serve to filter the queried data down to data related to that attribute.

As used herein, the term "attribute" refers to sensors or instruments and/or the various physical qualities of assets that they may measure. For example, an asset of an HVAC system may include one or more sensors measuring temperature, fan speed, vibration, air pressure, air volume, status of dampers (open/closed), or any other metrics. The one or more sensors and/or the information they relay about the physical qualities of the asset may be referred to as attributes. Viewed holistically, attributes may assist in the understanding of how an asset is functioning.

For additional filters section 528, the user may select additional filter tags to narrow the query. As shown, such filter tags may include "Region," "Enterprise," "Distribution Center," "Inbound," and "Outbound," among other filter tags. In some embodiments, filter tags available for selection for additional filters section 528 may include various filter tags for filtering data queried from loT platform 125. In some embodiments, filter tags available for selection in additional filters section 528 may be a set of filter tags available for and/or associated with the filter tags already selected for asset types section 524 and/or attribute section 526. Though the example additional filters are shown generically, a "Region" filter may be representative of a specific region, such as the Mid-Atlantic United States, for example. Likewise, "Enterprise" and "Distribution Center" may similarly be representative of specific entities, buildings, locations, or the like. The filter tags selected for additional filters section 528 may serve to further filter the queried down to data related to those particular filter tags.

Based on the filter tags selected in query builder 520, query tool 500A may create generated query 510 in a syntax appropriate for retrieving data from loT platform 125. Generated query 510 may include portions 511, 512, 513, 514, 515, and 516 representative of the filter tags selected in query builder 520.

Basic details 530 may include and/or display summary information about generated query 510. For example, basic details 530 may include a name of the query, a description, and a metric ID indicative of the particular metric or data item retrieved by the query. The name field and description field may be automatically populated by query tool 500A based on selections made by the user in query builder 520, or alternatively may be input by the user. In some embodiments, basic details 530 may be indexed by the system and displayed to the user to allow the user to identify the query.

Once generated query 510 has been created by query tool 500A, query tool 500A and generated query 510 may be saved as a template for easy modification for future queries. For example, FIG. 5B illustrates an example of a query tool 500B similar to query tool 500A, but modified to arrive at a different metric, such as "Water Consumption."

Query tool 500B may show a generated query 540, a query builder 550, and basic details 560. Query builder 550 may be a section of query tool 500B in which the user use may aggregate filter tags to create generated query 540. When created from a template such as query tool 500A, query tool 500B may be pre-populated with filter tags from 500A and the filter tags may be changed or deselected as necessary. Query builder 550 may include a plurality of sections, such as name section 552, asset types section 554, attribute section 556, and additional filters section 558.

Each of the sections may have a set of filter tags allocated to and/or selectable for them. For example, a set of filter tags corresponding to names of metrics may be allocated to name section 552. As shown in FIG. 5B, the user may select a filter tag titled "Water Consumption" for name section 552. Alternatively, name section 552 may allow the user to enter text to create a custom name for a particular metric.

As further shown in FIG. 5B, the user may select a filter tag titled "Water Meter" for asset types section 524. The "Water Meter" filter tag may be selected from a set of filter tags indicative of various assets (or edge devices). The filter tag selected for asset types section 554 may be indicative of a water meter and may serve to filter the queried data down to data related to one or more water meters. The user may further select a filter tag titled "Water Consumption Totalized" for attribute section 556. "Water Consumption Totalized" may be selected from a set of filter tags indicative of various attributes for the assets recognized by the system. In some embodiments, "Water Consumption Totalized" may be selected from a set of filter tags available for and/or associated with the filter tag already selected for asset types section 554. The "Water Consumption Totalized" filter tag may serve to filter the queried data down to data related to that attribute.

For additional filters section 558, the user may select additional filter tags to narrow the query. As shown, such filter tags may include "Company," "Region," "Site," "Plant," and "Area," among other filters. In some embodiments, filter tags available for selection for additional filters section 558 may include various filter tags for filtering data queried from loT platform 125. In some embodiments, filter tags available for selection for additional filters section 558 may be a set of filter tags available for and/or associated with the filter tags already selected for asset types section 554 and/or attribute section 556. Though the example additional filters are shown generically, a "Region" filter may be representative of a specific region, such as the Mid-Atlantic United States, for example. Likewise, "Company," "Site," "Plant," and "Area" may similarly be representative of specific entities, buildings, locations, or the like. The filter tags selected for additional filters section 558 may serve to further filter the queried down to data related to those particular filter tags.

Based on the filter tags selected in query builder 550, query tool 500B may create generated query 540 in a syntax appropriate for retrieving data from loT platform 125. Generated query 540 may include portions 541, 542, 543, 544, 545, 546, and 547 representative of the filter tags selected in query builder 550.

Basic details 560 may include and/or display summary information about generated query 540. For example, basic details 560 may include a name of the query, a description, and a metric ID indicative of the particular metric or data item retrieved by the query. The name field and description field may be automatically populated by query tool 500B based on selections made by the user in query builder 550, or alternatively may be input by the user.

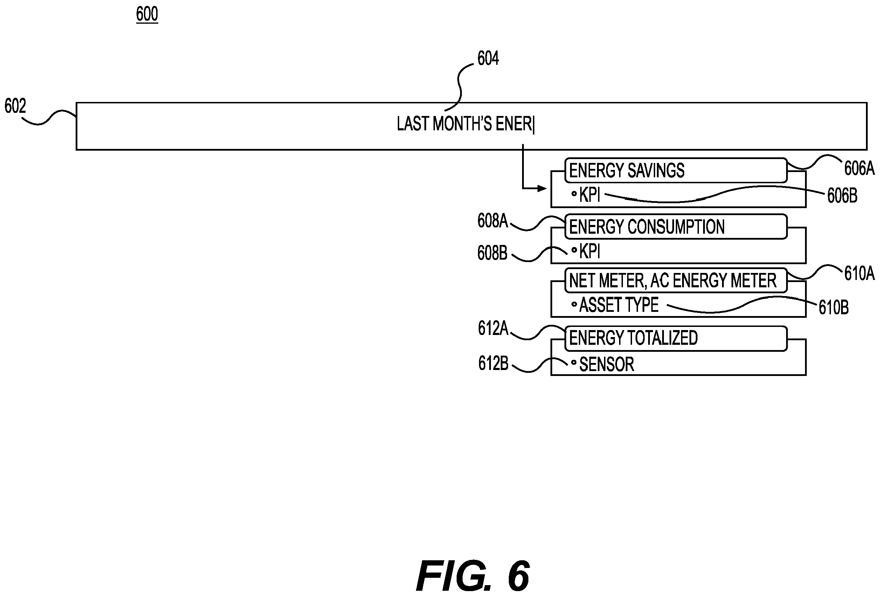

FIG. 6 shows an example of a user driven search 600 according to certain embodiments. User driven search 600 may be displayed on a user interface of the end user application described herein previously. User driven search 600 may include a search prompt 602 whereby a user may input a text string 604 as a search parameter. As shown in FIG. 6, an exemplary text string 604 reading "LAST MONTH'S ENER" may be entered into the search prompt 602. Text string 604 may be a completed text string or a partially completed text string, as shown in FIG. 6.

In some embodiments, instead of entering a text string via a keyboard, touchscreen, or the like, the user may be prompted to make a verbal command to enter search parameters into search prompt 602. For example, the user device may detect the verbal command using a microphone and then convert the verbal command to a text string using natural language processing.

In response to text string 604 being entered into search prompt 602, user driven search 600 may generate a hierarchy of filter tags and may display a first set of filter tags from the hierarchy of filter tags for the user to select from. For example, the first set of filter tags may include a filter tag 606A titled "ENERGY SAVINGS" and identified with the label 606B as a KPI.

If the user selects filter tag 606A, user driven search 600 may display a second set of filter tags from the hierarchy of filter tags for the user to select from, where the second set of filter tags is grouped under filter tag 606A in the hierarchy. For example, the second set of filter tags may include a filter tag 608A titled "ENERGY CONSUMPTION" and identified with the label 608B as a KPI.

If the user selects filter tag 608A, user driven search 600 may display a third set of filter tags from the hierarchy of filter tags for the user to select from, where the third set of filter tags is grouped under filter tag 608A in the hierarchy. For example, the third set of filter tags may include a filter tag 610A titled "NET METER, AC ENERGY METER" and identified with the label 610B as an asset type.

If the user selects filter tag 610A, user driven search 600 may display a fourth set of filter tags from the hierarchy of filter tags for the user to select from, where the fourth set of filter tags is grouped under filter tag 610A in the hierarchy. For example, the fourth set of filter tags may include a filter tag 612A titled "ENERGY TOTALIZED" and identified with the label 612B as a sensor.

Upon selection of a sufficient quantity of filter tags, user driven search 600 may cause a widget showing a particular metric to be displayed by the end user application. The widget may be similar to the widgets described herein previously with reference to FIGS. 4, 5A, and 5B.

It should be understood that the specific filter tags depicted in FIG. 6 are exemplary in nature only and are not intended to be limiting. The hierarchy of filter tags presented may vary depending on the text entered for text string 604, the facility monitored by the user, and/or the user's responsibilities. For example, if text string 604 is changed to "LAST MONTH'S WATER," a hierarchy of filter tags relating to water consumption may be displayed to the user.

In another example, user driven search 600 may be configured to display filter tags relating to a particular facility the user is charged with monitoring. The hierarchy of filter tags may therefore correspond to various assets and data points associated with the facility which are to be monitored. An exemplary hierarchy for a particular facility may include: (1) filter tags for identifying the particular facility complex at a top level; (2) filter tags for identifying blocks or subsections of the selected facility complex at a subsequent level; (3) filter tags for identifying building units within the selected block at a subsequent level; (4) filter tags for identifying floors of the selected block at a subsequent level; (5) filter tags for identifying zones of the selected floor at a subsequent level; and/or (6) filter tags for identifying sensor systems, controller systems, and/or other data end points of the selected zone at the lowest level.

In another example, user driven search 600 may be configured to display filter tags relating to a specific manufacturing plant that the user is tasked with monitoring. In such an example, the hierarchy of filter tags may include at a top level filter tags for each of the functional units of the plant, such as materials processing, assembly, finishing, quality control, and the like. At a subsequent level, the hierarchy may include filter tags for each asset within a selected functional unit. At lower levels, the hierarchy may include filter tags for particular attributes and/or KPIs relating to a selected asset. The hierarchy of filter tags may be modified for users charged with monitoring other specific facilities, such as oil refineries, office buildings, hospitals, or any other suitable facility.

In some embodiments, the hierarchy of filter tags displayed to the user may be based on the user's role and/or level of responsibility. For example, a field manager may have access only to filter tags for KPIs that may be specific to field level monitoring of a particular facility. A facility manager, on the other hand, may have access to filter tags for more complex and broadly applicable KPIs for a facility based on his or her role. Each of the KPIs displayed to the user may be associated in the hierarchical structure described herein.

In some embodiments, the user device by which the user makes the selections may accept gestures as inputs. For example, the user device may be a wearable device such as an AR headset with hand-held remotes. As another example, the user device may be a stationary device such as a display or projector with one or more motion sensors. In such embodiments, the user may select filter tags by making any of a variety of gestures, including blinking, facial gestures, finger pointing, hand gestures, full body movement, or the like. The user device may further predict filter tags and/or other selectable objects the user may wish to select by detecting a target of the user's gaze.

In some embodiments, a combination of screen-based input, physical gestures, and/or spoken commands may be used seamlessly to generate and execute a search query. In such an embodiment, the user interface may support multi-modal input and may work to provide consistent search results irrespective of the mode through which the user provides the input. For example, referring to user driven search 600 shown in FIG. 6, the user may enter text string 604 by providing spoken commands and/or entering text on a keyboard or display. The user may then select filter tags by any combination of screen-based selection, physical gestures, and/or spoken commands.

Further, though FIG. 6 is shown with text string 604 entered into search prompt 602, it should be understood that the search parameters need not be limited to text strings. For example, and as will be described hereinafter, image data including images of assets may substitute for text strings as search parameters. In some embodiments, a plurality of images may be input as search parameters. For example, the plurality of images may depict one or more assets inspected by a user and captured using a camera. In response to the plurality of images being entered, user driven search 600 may identify the assets depicted in the images and may derive contextual information using the COM and/or EOM described herein previously. Filter tags may then be suggested to the user accordingly. For example, if the images depict a compressor and a heat exchanger, the COM and/or EOM may be used to determine that the compressor and heat exchanger are collectively part of an HVAC system in a facility. Filter tags related to the HVAC system may then be suggested to the user via user driven search 600.

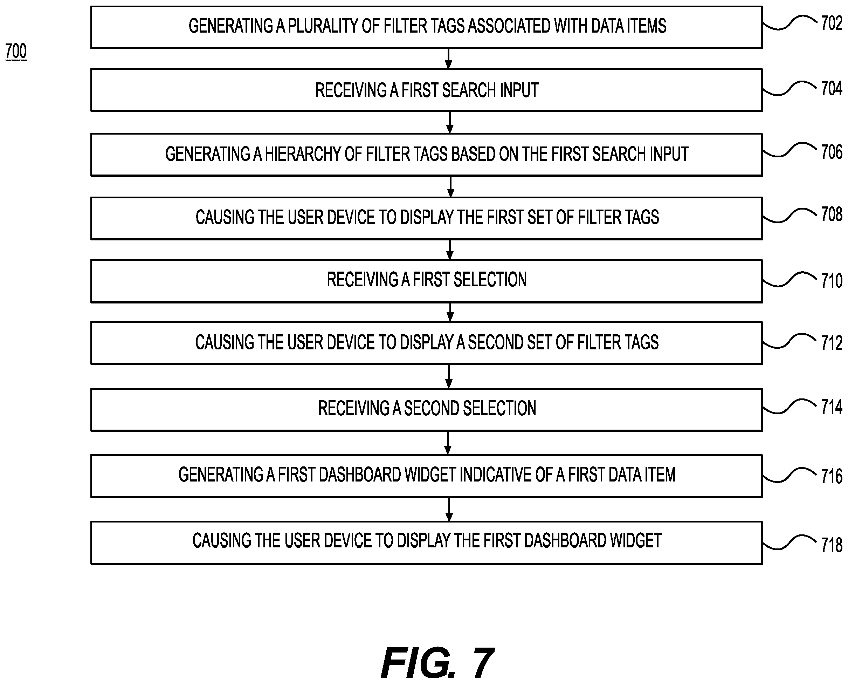

Hereinafter, methods of navigating graphical user interfaces of the systems previously disclosed are described. It should be understood that in various embodiments, various components or combinations of components of the systems discussed previously may execute instructions or perform acts including the acts discussed below. Further, it should be understood that in various embodiments, various steps may be added, omitted, and/or rearranged in any suitable manner. For brevity, the term "system" will be used in the description of FIGS. 7-9 provided hereinafter, though it should be understood that the term "system" may encompass one or more of the computer systems described herein previously.

FIG. 7 depicts an exemplary method 700 of navigating a graphical user interface and displaying a dashboard widget, according to one or more embodiments. It should be understood that the method 700 may include fewer than all steps shown in FIG. 7 or may alternatively include additional steps not shown in FIG. 7.

At step 702, the system may generate a plurality of filter tags. The system may generate the plurality of filter tags automatically upon ingesting data and/or recognizing an asset. Each of the filter tags may be associated with one or more data items stored by the system and may allow the system to sort and filter the data. Moreover, each of the data items stored by the system may be associated with one or more filter tags such that by applying certain combinations of filter tags, each data item may be located by a user via an end user application.

At step 704, the system may receive a first search input from a user device. The user device may be running end user application allowing the user to access the platform. The user may be prompted by the end user application to submit search parameters as a search input. In some embodiments, the search parameters may be a text string. In some embodiments, the search parameters may be a verbal command converted to a text string.

At step 706, in response to receiving the first search input, the system may generate a hierarchy of filter tags. The first search input may be processed using known techniques for natural language processing to identify the content thereof or may be processed by any other suitable technique. Once the first search input is processed, the hierarchy of filter tags may be generated based on the first search input. The hierarchy of filter tags may include at least a first set of filter tags and a second set of filter tags, where the second set of filter tags is a subset of at least one of the first set of filter tags.

At step 708, the system may cause the user device to display the first set of filter tags. The user device may display the first set of filter tags in any suitable manner such that each of the first set of filter tags is selectable by the user.

At step 710, the system may receive a first selection from the user device. The first selection may be indicative of at least one of the first set of filter tags. For example, in response to the user device displaying the first set of filter tags, the user may identify one or more of the first set of filter tags and may select those filter tags. The user device may then transmit the first selection to the system.

At step 712, in response to receiving the first selection, the system may cause the user device to display the second set of filter tags. The second set of filter tags may be grouped as one or more subsets of the selected one or more of the first set of filter tags and may be displayed in any suitable manner such that each of the second set of filter tags is selectable by the user.

At step 714, the system may receive a second selection from the user device. The second selection may be indicative of at least one of the second set of filter tags. For example, in response to the user device displaying the second set of filter tags, the user may identify one or more of the second set of filter tags and may select those filter tags. The user device may then transmit the second selection to the system.

At step 716, in response to receiving the second selection, the system may generate a first dashboard widget. The first dashboard widget may be similar to the dashboard widgets shown in FIG. 3 and FIG. 4 and may include a metric associated with a first data item. The metric, for example, may be any metric related or otherwise relevant to the assets or devices comprising, connected to, or recognized by the system. At step 718, the system may cause the user device to display the dashboard widget.

While method 700 in FIG. 7 refers to a first selection and a second selection, it should be understood that in some circumstances fewer or more than two selections of filter tags may be required to generate and display the dashboard widget. For example, in some embodiments and for some metrics, a user may make three, four, five, or any number of successive selections of filter tags before a dashboard widget is generated and displayed. A number of selections required may depend, at least in part, on a quantity and variety of data stored by the system. It should also be understood that following generation and display of the dashboard widget, the user may continue to make selections of filter tags, which may ultimately cause the displayed widget to be updated, replaced by a different widget, or stop being displayed.

It is to be understood that method 700 need not necessarily be performed in the exact order described herein and the steps described herein may be rearranged in some embodiments. Further, in some embodiments fewer than all steps of method 700 may be performed and in some embodiments additional steps may be performed.

Method 700 as described herein may allow a user to navigate to a desired dashboard widget including a relevant metric without the need to click through large numbers of dashboard screens to find it. Instead, the user may simply enter natural language search parameters and be prompted to select filter tags identified by the system as relevant to the input. Further, the user need not have knowledge of an entire dictionary of filter tags as the system will suggest a hierarchy of filter tags, allowing the user to drill down to the desired data efficiently.

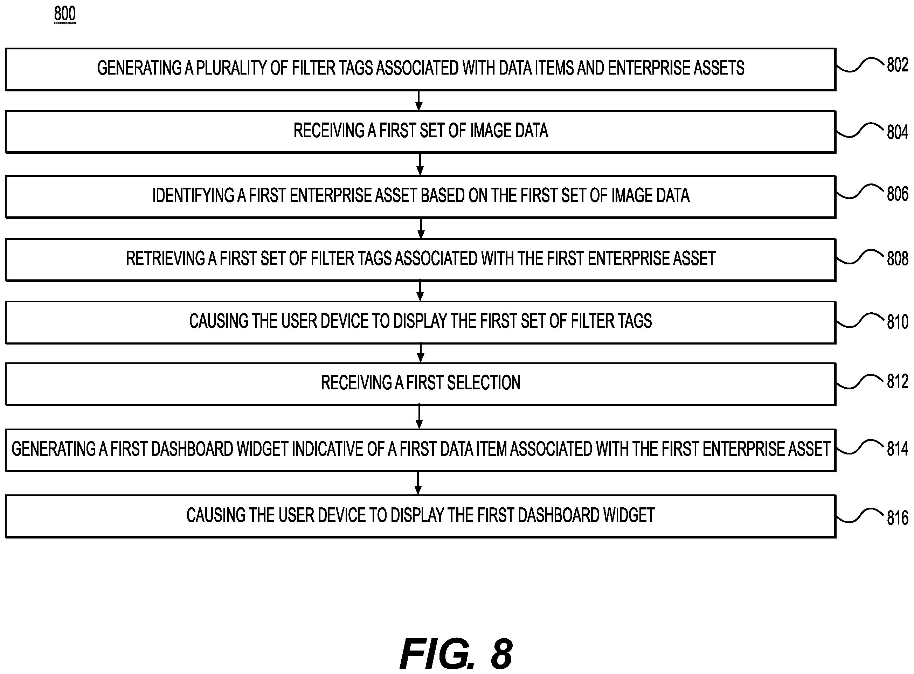

FIG. 8 depicts another exemplary method 800 of navigating a graphical user interface and displaying a dashboard widget, according to one or more embodiments. Rather than text string search parameters, however, method 800 involves the use of image data to suggest and identify filter tags. It should be understood that the method 800 may include fewer than all steps shown in FIG. 8 or may alternatively include additional steps not shown in FIG. 8.

At step 802, the system may generate a plurality of filter tags. The system may generate the plurality of filter tags automatically upon ingesting data and/or recognizing an asset. Each of the filter tags may be associated with one or more data items stored by the system and may allow the system to sort and filter the data. Each of the filter tags may also be associated with one or more enterprise assets connected to, associated with, or otherwise recognized by the system. Moreover, each of the data items stored by the system and enterprise assets may be associated with one or more filter tags such that by applying certain combinations of filter tags, each data item and/or enterprise asset may be located by a user via an end user application.

At step 804, the system may receive a first set of image data from a user device. The first set of image data may include at least one image of a first asset. For example, the user may take one or more photographs of an asset for which he or she wants to view data or a particular metric. More specifically, if for example, the user desires to view energy-related data and/or metrics associated with a particular energy meter, the user may take one or more photographs of the net meter using a camera of the user device. The user may then upload the one or more photographs to the system as search parameters. In some embodiments, the user may be prompted by the end user application to provide images as a search input.

At step 806, in response to receiving the first set of image data, the system may identify a first enterprise asset (or edge device) as matching the first asset in the at least one image. The system may perform the identification using any known image matching technique. For example, the system may maintain a database of images of the enterprise assets connected thereto, associated therewith, or otherwise recognized thereby and match the at least one image to one or more images in the database.

At step 808, the system may retrieve a first set of filter tags associated with the first enterprise asset identified in the one or more images. The system may retrieve the first set of filter tags from a database of filter tags maintained by the system. For example, the system may generate and maintain filter tags associated with one or more data items stored by the system and/or one or more enterprise assets known to the system. The filter tags may further allow the system to sort and filter the data. Moreover, each of the enterprise assets stored by the system may be associated with one or more filter tags such that by applying certain combinations of filter tags, each enterprise asset may be located by a user via an end user application.

At step 810, the system may cause the user device to display the first set of filter tags. The user device may display the first set of filter tags in any suitable manner such that each of the first set of filter tags is selectable by the user.

At step 812, the system may receive a first selection from the user device. The first selection may be indicative of at least one of the first set of filter tags. For example, in response to the user device displaying the first set of filter tags, the user may identify one or more of the first set of filter tags and may select those filter tags. The user device may then transmit the first selection to the system.

At step 814, in response to receiving the second selection, the system may generate a first dashboard widget. The first dashboard widget may be similar to the dashboard widgets shown in FIG. 3 and FIG. 4 and may include a metric associated with the first enterprise asset. For example, if the user uploaded an image of an energy meter at step 804, the metric may be associated with that energy meter. At step 816, the system may cause the user device to display the dashboard widget.

While method 800 in FIG. 8 refers to a first set of image data and a first asset, the system may receive additional sets of image data showing additional assets. For example, after uploading one or more images of a first asset, the user may further upload one or more images of a second asset in a second set of image data. The system may be configured to perform image matching to identify the second asset and determine a context of the first asset and the second asset. For example, if the user uploads one or more images of an energy meter and one or more images of a boiler, the system may determine an operational relationship between the energy meter and the boiler using knowledge graphs described herein previously. The system may then retrieve and cause display of a set of filter tags associated with the first enterprise asset and the second enterprise asset that accounts for the context between the assets.

It is to be understood that method 800 need not necessarily be performed in the exact order described herein and the steps described herein may be rearranged in some embodiments. Further, in some embodiments fewer than all steps of method 800 may be performed and in some embodiments additional steps may be performed.

Method 800 as described herein may allow a user to navigate to a desired dashboard widget including a relevant metric without the need to click through large numbers of dashboard screens to find it. Instead, the user may simply take one or more images of an asset of interest, upload the one or more images, and be prompted to select filter tags identified by the system as relevant to the asset in the images. Further, the user need not have knowledge of a dictionary of filter tags or even metrics available for the asset as the system will suggest filter tags, allowing the user to drill down to desired metrics.

Further, method 800 may allow a user to identify and navigate to metrics relevant to multiple assets. In an exemplary use case, the user may be a field worker, a building manager, or maintenance personnel tasked with monitoring the operation of multiple assets or even an entire facility. As the user travels throughout the facility, the user may capture images of various assets of interest, without necessarily knowing what metrics are available for the assets or what the assets are used for. The user may then upload the images to the system. Using the COM and/or EOM, the system may identify a context for the assets, including the facility in which they are located, the system of which they are included, and any telemetry data, metrics, KPIs, or the like relevant to the assets. The user may then be presented with filter tags to allow the user to drill down into desired information for the assets. The user may therefore gain useful insight into the functioning of groups of assets and/or the overall facility simply by capturing and submitting images to the user interface and selecting filter tags of interest among the suggested filter tags.

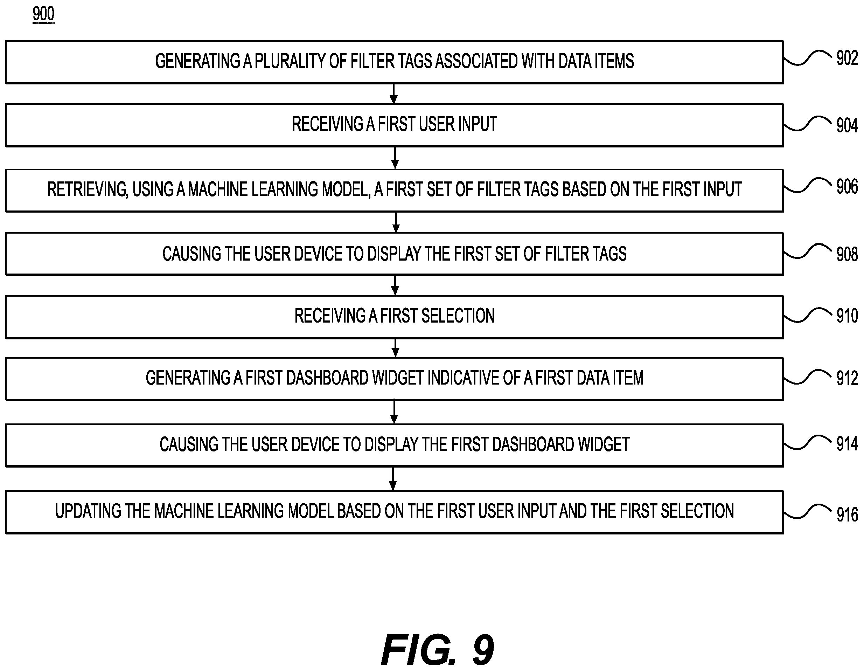

FIG. 9 depicts an exemplary method 900 of navigating a graphical user interface, displaying a dashboard widget, and updating a machine learning model according to one or more embodiments. It should be understood that the method 900 may include fewer than all steps shown in FIG. 9 or may alternatively include additional steps not shown in FIG. 9.

In some embodiments the system may incorporate a machine learning model trained to learn associations between user inputs and filter tags. The machine learning model may be trained according to any suitable training protocol, including supervised training, semi-supervised training, self-supervised training, or unsupervised training. In some embodiments, the machine learning model may be trained using training data sets. For example, the machine learning model may be trained by providing a set of user inputs, providing a set of filter tags, and manually associating each of the user inputs with one or more of the filter tags. By incorporating a machine learning model, the system may improve the accuracy of filter tag suggestions over time.

At step 902, the system may generate a plurality of filter tags. The system may generate the plurality of filter tags automatically upon ingesting data and/or recognizing an asset. Each of the filter tags may be associated with one or more data items stored by the system and may allow the system to sort and filter the data. Each of the filter tags may also be associated with one or more enterprise assets connected to, associated with, or otherwise recognized by the system. Moreover, each of the data items stored by the system and enterprise assets may be associated with one or more filter tags such that by applying certain combinations of filter tags, each data item and/or enterprise asset may be located by a user via an end user application.

At step 904, the system may receive a first input from a user device. The user device may be running an end user application allowing the user to access the platform. The user may be prompted by the end user application to submit search parameters as a search input. In some embodiments, the search parameters may be a text string. In some embodiments the search parameters may be a verbal command. In some embodiments, the search parameters may include image data. In some embodiments, the search parameters may include a combination of the foregoing.

At step 906, the system may retrieve, using the machine learning model, a first set of filter tags based on the first input. The system may retrieve the first set of filter tags from a database of filter tags maintained by the system. For example, the system may generate and maintain filter tags associated with one or more data items stored by the system and/or one or more enterprise assets known to the system. The filter tags may further allow the system to sort and filter the data. Moreover, each of the enterprise assets and each of the data items stored by the system may be associated with one or more filter tags such that by applying certain combinations of filter tags, each enterprise asset may be located by a user via an end user application.

At step 908, the system may cause the user device to display the first set of filter tags. The user device may display the first set of filter tags in any suitable manner such that each of the first set of filter tags is selectable by the user.

At step 910, the system may receive a first selection from the user device. The first selection may be indicative of at least one of the first set of filter tags. For example, in response to the user device displaying the first set of filter tags, the user may identify one or more of the first set of filter tags and may select those filter tags. The user device may then transmit the first selection to the system.

At step 912, in response to receiving the first selection, the system may generate a first dashboard widget. The first dashboard widget may be similar to the dashboard widgets shown in FIG. 3 and FIG. 4 and may include a metric associated with a first data item. The metric, for example, may be any metric related or otherwise relevant to the assets or devices comprising, connected to, or recognized by the system. At step 914, the system may cause the user device to display the dashboard widget.

At step 916, the system may update the machine learning model based on the first user input and the first selection. For example, the first user input and the first selection may be fed to the machine learning model in a feedback loop. As a result of the feedback loop, the machine learning model may use the association between the first user input and the first selection to refine its learned associations. In some embodiments, the machine learning model may further be updated using information associated with the first user input and the first user selection. For example, the machine learning model may account for a time of the first user input and/or first user selection, a location of the user device when the first user input and/or first user selection is made, an access level assigned to the user device or user, or the like. By updating the machine learning model with feedback from the user, over time and with continued use the system may provide more accurate filter tag suggestions.

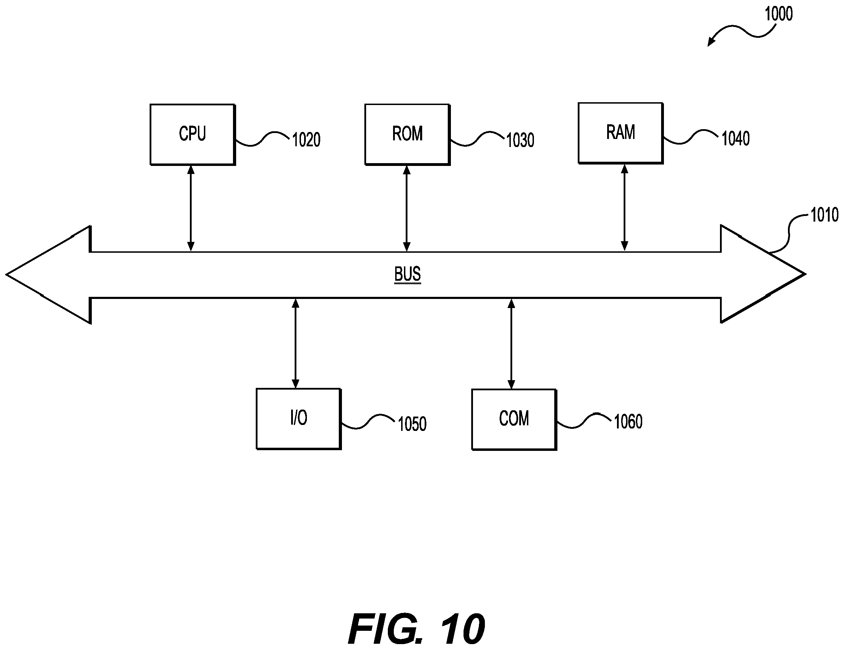

FIG. 10 depicts an example system that may execute techniques presented herein. FIG. 10 is a simplified functional block diagram of a computer that may be configured to execute techniques described herein, according to exemplary embodiments of the present disclosure. Specifically, the computer (or "platform" as it may not be a single physical computer infrastructure) may include a data communication interface 1060 for packet data communication. The platform may also include a central processing unit ("CPU") 1020, in the form of one or more processors, for executing program instructions. The platform may include an internal communication bus 1010, and the platform may also include a program storage and/or a data storage for various data files to be processed and/or communicated by the platform such as ROM 1030 and RAM 1040, although the system 1000 may receive programming and data via network communications. The system 1000 also may include input and output ports 1050 to connect with input and output devices such as keyboards, mice, touchscreens, monitors, displays, etc. Of course, the various system functions may be implemented in a distributed fashion on a number of similar platforms, to distribute the processing load. Alternatively, the systems may be implemented by appropriate programming of one computer hardware platform.

The general discussion of this disclosure provides a brief, general description of a suitable computing environment in which the present disclosure may be implemented. In one embodiment, any of the disclosed systems and/or methods may be executed by or implemented by a computing system consistent with or similar to that depicted and/or explained in this disclosure. Although not required, aspects of the present disclosure are described in the context of computer-executable instructions, such as routines executed by a data processing device, e.g., a server computer, wireless device, and/or personal computer. Those skilled in the relevant art will appreciate that aspects of the present disclosure can be practiced with other communications, data processing, or computer system configurations, including: internet appliances, hand-held devices (including personal digital assistants ("PDAs")), wearable computers, all manner of cellular or mobile phones (including Voice over IP ("VoIP") phones), dumb terminals, media players, gaming devices, virtual reality devices, multi-processor systems, microprocessor-based or programmable consumer electronics, set-top boxes, network PCs, mini-computers, mainframe computers, and the like. Indeed, the terms "computer," "server," and the like, are generally used interchangeably herein, and refer to any of the above devices and systems, as well as any data processor.

Aspects of the present disclosure may be embodied in a special purpose computer and/or data processor that is specifically programmed, configured, and/or constructed to perform one or more of the computer-executable instructions explained in detail herein. While aspects of the present disclosure, such as certain functions, are described as being performed exclusively on a single device, the present disclosure may also be practiced in distributed environments where functions or modules are shared among disparate processing devices, which are linked through a communications network, such as a Local Area Network ("LAN"), Wide Area Network ("WAN"), and/or the Internet. Similarly, techniques presented herein as involving multiple devices may be implemented in a single device. In a distributed computing environment, program modules may be located in both local and/or remote memory storage devices.

Aspects of the present disclosure may be stored and/or distributed on non-transitory computer-readable media, including magnetically or optically readable computer discs, hard-wired or preprogrammed chips (e.g., EEPROM semiconductor chips), nanotechnology memory, biological memory, or other data storage media. Alternatively, computer implemented instructions, data structures, screen displays, and other data under aspects of the present disclosure may be distributed over the internet and/or over other networks (including wireless networks), on a propagated signal on a propagation medium (e.g., an electromagnetic wave(s), a sound wave, etc.) over a period of time, and/or they may be provided on any analog or digital network (packet switched, circuit switched, or other scheme).

Program aspects of the technology may be thought of as "products" or "articles of manufacture" typically in the form of executable code and/or associated data that is carried on or embodied in a type of machine-readable medium. "Storage" type media include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the internet or various other telecommunication networks. Such communications, for example, may enable loading of the software from one computer or processor into another, for example, from a management server or host computer of a mobile communication network into the computer platform of a server and/or from a server to the mobile device. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links, or the like, also may be considered as media bearing the software. As used herein, unless restricted to non-transitory, tangible "storage" media, terms such as computer or machine "readable medium" refer to any medium that participates in providing instructions to a processor for execution.

The terminology used above may be interpreted in its broadest reasonable manner, even though it is being used in conjunction with a detailed description of certain specific examples of the present disclosure. Indeed, certain terms may even be emphasized above; however, any terminology intended to be interpreted in any restricted manner will be overtly and specifically defined as such in this Detailed Description section. Both the foregoing general description and the detailed description are exemplary and explanatory only and are not restrictive of the features, as claimed.

The terminology used in the description of the various described embodiments herein is for the purpose of describing particular embodiments only and is not intended to be limiting. As used in the description of the various described embodiments and the appended claims, the singular forms "a", "an" and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, "one or more" includes a function being performed by one element, a function being performed by more than one element, e.g., in a distributed fashion, several functions being performed by one element, several functions being performed by several elements, or any combination of the above.

It will also be understood that, although the terms first, second, etc. are, in some instances, used herein to describe various elements, these elements should not be limited by these terms. These terms are only used to distinguish one element from another. For example, a first selection could be termed a second selection, and, similarly, a second selection could be termed a first selection, without departing from the scope of the various described embodiments. The first selection and the second selection are both selections, but they are not the same selection.

As used herein, the term "if" is, optionally, construed to mean "when" or "upon" or "in response to determining" or "in response to detecting," depending on the context. Similarly, the phrase "if it is determined" or "if [a stated condition or event] is detected" is, optionally, construed to mean "upon determining" or "in response to determining" or "upon detecting [the stated condition or event]" or "in response to detecting [the stated condition or event]," depending on the context.

In this disclosure, relative terms, such as, for example, "about," "substantially," "generally," and "approximately" are used to indicate a possible variation of ±10% in a stated value.

The term "exemplary" is used in the sense of "example" rather than "ideal."

Other embodiments of the disclosure will be apparent to those skilled in the art from consideration of the specification and practice of the embodiments disclosed herein. It is intended that the specification and examples be considered as exemplary only, with a true scope and spirit of the present disclosure being indicated by the following claims.

## Claims

1. A method, comprising:
generating, based on an object model by a system comprising at least one processor, a plurality of filter tags, wherein each of the filter tags are associated with one or more data items and wherein the object model includes (1) telemetry data associated with a plurality of assets and (2) contextual data associated with the plurality of assets;
receiving, by the system from a user device, a first search input;
in response to receiving the first search input, generating, by the system, a hierarchy of filter tags from the plurality of filter tags based on the first search input, the hierarchy including at least a first set of filter tags and a second set of filter tags;
causing, by the system, the user device to display the first set of filter tags;
receiving, by the system from the user device, a first selection indicative of at least one of the first set of filter tags;
in response to receiving the first selection, causing, by the system, the user device to display the second set of filter tags;
receiving, by the system from the user device, a second selection indicative of at least one of the second set of filter tags;
in response to receiving the second selection, generating, by the system, a first dashboard widget based on the first selection and second selection, the first dashboard widget being indicative of a first data item; and
causing, by the system, the user device to display the first dashboard widget.

2. The method of claim 1, wherein the hierarchy further includes a third set of filter tags, the method further comprising:
in response to receiving the second selection, causing, by the system, the user device to display the third set of filter tags;
receiving, by the system from the user device, a third selection indicative of at least one of the third set of filter tags;
in response to receiving the third selection, generating, by the system, a second dashboard widget based on the third selection, the second dashboard widget being indicative of a second data item different from the first data item; and
causing, by the system, the user device to display the second dashboard widget.

3. The method of claim 2, further comprising:
in response to receiving the third selection, causing, by the system, the user device to stop displaying the first dashboard widget.

4. The method of claim 1, wherein the system generates the hierarchy of filter tags using a machine learning model trained to learn associations between search inputs and filter tags, the method further comprising:
updating, by the system, the machine learning model using the first search input, the first selection, and the second selection.

5. The method of claim 1, wherein generation of the first dashboard widget is further based on an access level assigned to the user device or a user of the user device.

6. The method of claim 1, wherein at least one of the first selection and the second selection is input to the user device by a physical gesture of a user.

7. The method of claim 1, wherein the first search input is input to the user device verbally and converted using natural language processing.

8. The method of claim 1, wherein the first set of filter tags and the second set of filter tags comprise one or more of: an asset type, an asset attribute, a key performance indicator, a metric, an event, a dashboard identifier, a widget identifier, a process, a data integration, and a data transformation.

9. The method of claim 1, further comprising:
storing, by the system, the first selection and the selection as a template query.

10. The method of claim 9, further comprising:
receiving, by the system from the user device, a modification request, the modification request indicative of a requested modification to the template query;
in response to the modification request, causing, by the system, the user device to display a third set of filter tags;
receiving, by the system from the user device, a third selection indicative of at least one of the third set of filter tags;
in response to receiving the third selection, generating, by the system, a second dashboard widget based on the third selection, the second dashboard widget being indicative of a second data item different from the first data item; and
causing, by the system, the user device to display the second dashboard widget.
